# EUROPEAN PATENT APPLICATION

(11) **EP 4 246 614 A1**
(43) Date of publication of application: **20.09.2023**
(21) Application number: 21891969.4
(22) Date of filing: 11.11.2021
(51) Int. Cl.: H01M 4/133, H01M 4/134, H01M 4/1393, H01M 4/1395, H01M 4/36, H01M 4/38, H01M 4/48, H01M 4/583, H01M 4/62

(54) **NEGATIVE ELECTRODE MATERIAL SHEET FOR NON-AQUEOUS SECONDARY CELL, METHOD FOR MANUFACTURING SAME, NEGATIVE ELECTRODE FOR NON-AQUEOUS SECONDARY CELL, AND NON-AQUEOUS SECONDARY CELL**

(30) Priority: 13.11.2020 JP 2020189808; 14.06.2021 JP 2021099053
(71) Applicant: Zeon Corporation, Tokyo 100-8246 (JP)
(72) Inventor: MURAKAMI Yasuyuki, Tokyo 100-8246 (JP)
(74) Representative: Maiwald GmbH
(86) International application number: PCT/JP2021/041609
(87) International publication number: WO 2022/102724

(57) **Abstract**

The purpose of the present invention is to provide a negative electrode material sheet for a non-aqueous secondary cell, the negative electrode material sheet being capable of forming a negative electrode that can exhibit exceptional rate characteristics in a non-aqueous secondary cell. This negative electrode material sheet for a non-aqueous secondary cell is characterized by containing a particulate carbon material, and moreover is characterized in that the ratio I(110)/I(004) of the diffraction intensity of the (110) plane with respect to the diffraction intensity of the (004) plane in X-ray diffraction of a main surface is 1.1 or greater, and at least one of (1) the resin content being 8 mass% or less and (2) the density being 1.3 g/cm³ or less is satisfied.

## Description

### TECHNICAL FIELD

This disclosure relates to a negative electrode material sheet for a non-aqueous secondary battery, a method of producing the same, a negative electrode for a non-aqueous secondary battery, and a non-aqueous secondary battery.

### BACKGROUND

Non-aqueous secondary batteries (hereinafter, also referred to simply as "secondary batteries") such as lithium ion secondary batteries have characteristics such as compact size, light weight, high energy-density, and the ability of being repeatedly charged and discharged, and are used in a wide variety of applications. In light thereof, in recent years, studies have been made to improve battery members such as electrodes (positive and negative electrodes), aiming at achieving even higher secondary battery performance.

A negative electrode for a secondary battery, such as a lithium ion secondary battery, generally includes a current collector and an electrode mixed material layer (negative electrode mixed material layer) formed on the current collector. The negative electrode mixed material layer (also referred to as "negative electrode active material layer") includes, for example, a negative electrode active material and a resin component such as a binder to be used as necessary.

Therefore, in recent years, attempts have been made to improve the negative electrode mixed material layer, to thereby further improve the performance of the secondary battery.

For example, Patent Literature (PTL) 1 discloses a negative electrode active material layer, in which, for the purpose of improving the input/output characteristics (rate characteristics) and the like of the secondary battery, at least 50% by number of the total amount of the negative electrode active material is oriented such that the charge carriers are stored and released in a direction at an angle of 45° or more and 90° or less, relative to the surface of the current collector. Further, PTL 1 also reports that the input/output characteristics of the secondary battery would further be improved when the negative electrode active material layer has a ratio I(110)/I(004) of the diffraction intensity of the (110) plane relative to the diffraction intensity of the (004) plane in X-ray diffraction of the surface thereof of 0.6 or more and 1.0 or less. In PTL 1, a particulate carbon material such as, for example, a graphite material with flake shape is used as the negative electrode active material.

Further, studies have also been made to use a silicon active material as the negative electrode active material, in addition to the particulate carbon material described above, aiming to increase the battery capacity of the secondary battery (hereinafter, also simply referred to as "capacity") (see, for example, PTLs 1 and 2). The silicon active material greatly expands and shrinks along with charging and discharging of the secondary battery, causing a problem that the distance between the positive electrode and the negative electrode (interelectrode distance) is increased, whereas the silicon active material has a high theoretical capacity, which leads to an advantage that the capacity of the secondary battery can be increased.

Here, in PTLs 2 and 3, in preparing a negative electrode, a paste containing a particle carbon material and a silicon active material is applied on a current collector, and a magnetic field is applied to the applied paste, whereby the particulate carbon material is oriented in a predetermined direction in the obtained negative electrode mixed material layer.

### CITATION LIST

### Patent Literature

PTL1: WO2013/088540A
PTL 2: JP2018-129212A
PTL 3: JP2019-185943A

### SUMMARY

### (Technical Problem)

However, the non-aqueous secondary battery that uses a negative electrode including the negative electrode mixed material layer described above still has room for improvement in terms of the rate characteristics.

Accordingly, it could be helpful to provide a negative electrode material sheet for a non-aqueous secondary battery capable of forming a negative electrode capable of exhibiting excellent rate characteristics in a non-aqueous secondary battery.

It could also be helpful to provide a negative electrode capable of exhibiting excellent rate characteristics in a non-aqueous secondary battery.

It could further be helpful to provide a non-aqueous secondary battery capable of exhibiting excellent rate characteristics.

### (Solution to Problem)

The inventor conducted diligent investigation to achieve the objectives set forth above. Through this investigation, the inventor has found that, when a negative electrode material sheet containing a particulate carbon material that has a ratio I(110)/I(004) of a diffraction intensity in X-ray diffraction of a principal plane thereof that is equal to or more than a predetermined value, and satisfies at least one of the following conditions: (1) the negative electrode material sheet for a non-aqueous secondary battery contains a resin at a content ratio equal to or less than a predetermined value; and (2) the negative electrode material sheet for a non-aqueous secondary battery has a density equal to or less than a predetermined value, is used as a negative electrode mixed material layer which may be bonded to a current collector to fabricate a negative electrode, a non-aqueous secondary battery including such a negative electrode would exhibit excellent rate characteristics, to thereby complete the disclosure.

That is, this disclosure aims to advantageously solve the problems set forth above, and the non-aqueous negative electrode material sheet disclosed herein is a negative electrode material sheet for a non-aqueous secondary battery containing a particulate carbon material, in which the negative electrode material sheet for a non-aqueous secondary battery has a ratio I(110)/I(004) of a diffraction intensity of a (110) plane relative to a diffraction intensity of a (004) plane in X-ray diffraction of a principal plane thereof of 1.1 or more, and satisfies at least one of (1) and (2) below:
(1) the negative electrode material sheet for a non-aqueous secondary battery contains a resin at a content ratio of 8% by mass or less; and
(2) the negative electrode material sheet for a non-aqueous secondary battery has a density of 1.3 g/cm³ or less.

As described above, a negative electrode material sheet that contains a particulate carbon material and has a ratio I(110)/I(004) of a diffraction intensity in X-ray diffraction of a principal plane thereof that is equal to or more than a predetermined value, and further satisfies at least one of the following conditions: (1) the negative electrode material sheet for a non-aqueous secondary battery contains a resin at a content equal to or less than a predetermined value; and (2) the negative electrode material sheet for a non-aqueous secondary battery has a density equal to or less than a predetermined value, is capable of forming a negative electrode that could exhibit excellent rate characteristics in a secondary battery.

In the present disclosure, the ratio I(110)/I(004) of the diffraction intensity of the (110) plane to the diffraction intensity of the (004) plane in the X-ray diffraction of the principal plane of the negative electrode material sheet for the non-aqueous secondary battery, the content ratio of the resin in the negative electrode material sheet for the non-aqueous secondary battery, and the density of the negative electrode material sheet for the non-aqueous secondary battery may be measured by the method described in Examples disclosed herein.

Here, the negative electrode material sheet for a non-aqueous secondary battery disclosed herein preferably has a thickness of 80 µm or more. When the thickness of the negative electrode material sheet for the non-aqueous secondary battery is equal to or greater than the aforementioned predetermined value, a secondary battery produced using a negative electrode including the negative electrode material sheet can have a higher capacity.

In the present disclosure, the thickness of the negative electrode material sheet for a non-aqueous secondary battery may be measured by the method described in Examples disclosed herein.

In the negative electrode material sheet for a non-aqueous secondary battery disclosed herein, the particulate carbon material preferably includes scaly graphite. When scaly graphite is used as the particulate carbon material, the rate characteristics of the secondary battery produced using the negative electrode including the negative electrode material sheet can be further improved.

Further, in the negative electrode material sheet for a non-aqueous secondary battery disclosed herein, the particulate carbon material preferably has an aspect ratio of more than 1.2 and 20 or less. When the particulate carbon material having an aspect ratio within the aforementioned predetermined range is used, the rate characteristics of the secondary battery produced using the negative electrode including the negative electrode material sheet can be further improved.

In the present disclosure, the "aspect ratio" may be obtained by observing the particulate carbon material by a scanning electron microscope (SEM), measuring the maximum diameter (major axis) and the particle diameter (minor axis) in a direction perpendicular to the maximum diameter with respect to any 50 particulate carbon materials, and calculating the average of the ratio of the major axis to the minor axis (major axis/minor axis). In the above description, for example, in a case in which SEM is used to observe a particulate carbon material with scaly shape, the "major axis" refers to the length in the direction of the major axis of the principal plane of the scaly shape, and the "minor axis" refers to the length in the direction perpendicular to the major axis of the principal plane on the same plane as the principal plane.

In the negative electrode material sheet for a non-aqueous secondary battery disclosed herein, the ratio I(110)/I(004) is preferably 20 or more. When the ratio I(110)/I(004) of the diffraction intensity in the X-ray diffraction of the principal plane of the negative electrode material sheet for the non-aqueous secondary battery is equal to or greater than the aforementioned predetermined value, the rate characteristics of the secondary battery produced using the negative electrode including the negative electrode material sheet can be further improved.

Further, in the negative electrode material sheet for a non-aqueous secondary battery disclosed herein, the content ratio of the resin is preferably 3% by mass or less. When the content ratio of the resin in the negative electrode material sheet for the non-aqueous secondary battery is equal to or less than the aforementioned predetermined value, the rate characteristics of the secondary battery produced using the negative electrode including the negative electrode material sheet can be further improved.

In the negative electrode material sheet for a non-aqueous secondary battery disclosed herein, in a cross-sectional view in the thickness direction of the negative electrode material sheet, the particulate carbon material is oriented with respect to the principal plane of the negative electrode material sheet for a non-aqueous secondary battery preferably at an orientation angle θ₁ of 6° or more and 90° or less. When the orientation angle θ₁ of the orientation of the particulate carbon material with respect to the principal plane of the negative electrode material sheet for a non-aqueous secondary battery is within the aforementioned predetermined range as observed at a cross section of the negative electrode material sheet in the thickness direction, the rate characteristics of the secondary battery produced using the negative electrode including the negative electrode material sheet can be further improved.

Then, the negative electrode material sheet for a non-aqueous secondary battery further includes a silicon active material, and in a cross-sectional view in the thickness direction, the orientation angle θ₁ of the particulate carbon material with respect to the principal plane of the negative electrode material sheet for a non-aqueous secondary battery is preferably 45° or more and 90° or less, and the orientation angle θ₂ of the silicon active material with respect to the principal plane of the negative electrode material sheet for the non-aqueous secondary battery is preferably 45° or more and 90° or less. When the negative electrode material sheet further includes a silicon active material and the orientation angle θ₁ of the particulate carbon material is within the aforementioned predetermined range and the orientation angle θ₂ of the silicon active material is within the aforementioned predetermined range as observed at a cross section of the negative electrode material sheet in the thickness direction, the secondary battery including the negative electrode material sheet can have a higher capacity, and the secondary battery can exhibit further excellent rate characteristics, and the increase in the interelectrode distance after repeated charging and discharging can be suppressed.

In the present disclosure, the "orientation angle" (θ₁, θ₂) of the negative electrode active material (particulate carbon material, silicon active material) with respect to the principal plane of the negative electrode material sheet in the cross-sectional view in the thickness direction refers to an angle (0° or more and 90°or less) formed by the principal plane of the negative electrode material sheet and a straight line obtained by extending the long diameter (major axis) of the negative electrode active material in the cross-section in the thickness direction of the negative electrode material sheet. In a case in which the principal plane of the negative electrode material sheet and the straight line obtained by extending the major axis of the negative electrode active material are parallel to each other, the orientation angle is 0°, and in a case in which the principal plane of the negative electrode material sheet and the straight line are perpendicular to each other, the orientation angle is 90°. Then, each orientation angle may be measured by the method described in Examples.

In the present disclosure, the "principal plane" of the negative electrode material sheet means a surface having a maximum area in the negative electrode material sheet and another surface facing the surface. The areas of the two principal planes may be the same.

Further, in the negative electrode material sheet for a non-aqueous secondary battery disclosed herein, the silicon active material accounts for 5% by volume or more and 30% by volume or less with respect to a total volume of the particulate carbon material and the silicon active material. When the ratio of the volume of the silicon active material to the total volume of the particulate carbon material and the silicon active material is within the predetermined range, the secondary battery can be further increased in capacity, and the secondary battery can exhibit excellent rate characteristics even more, and the increase in the interelectrode distance after repeated charging and discharging can be further suppressed.

Further, in the negative electrode material sheet for a non-aqueous secondary battery disclosed herein, the ratio of the mass of the fibrous carbon material relative to the total mass of the negative electrode material sheet for the non-aqueous secondary battery is preferably1% by mass or less. When the mass of the fibrous carbon material as an optional component is 1% by mass or less in the total mass of the negative electrode material sheet, the rate characteristics of the secondary battery can be further improved.

Further, the present disclosure is intended to advantageously solve the foregoing problems, and a method of producing a negative electrode material sheet for a non-aqueous secondary battery disclosed herein includes: a primary sheet shaping step of pressing a composition including a resin and a particulate carbon material into a sheet shape, to thereby obtain a primary sheet; a laminate forming step of stacking a plurality of the primary sheets in a thickness direction, or folding or winding the primary sheet, to thereby obtain a laminate; a slicing step of slicing the laminate at an angle of 45° or less with respect to a stacking direction, to thereby obtain a secondary sheet; and a calcinating step of calcinating the secondary sheet. The method of producing a negative electrode material sheet for a non-aqueous secondary battery disclosed herein enables to produce a negative electrode material sheet for a non-aqueous secondary battery that can exhibit excellent rate characteristics in a secondary battery.

In the method of producing a negative electrode material sheet for a non-aqueous secondary battery disclosed herein, the calcinating step preferably includes calcinating the secondary sheet at T-50°C or higher, with the decomposition temperature of the resin being T°C. When the secondary sheet is calcinated at a temperature equal to or higher than the predetermined value in the calcinating step, the rate characteristics of the secondary battery produced using the negative electrode including the negative electrode material sheet to be produced can be further improved.

In the present disclosure, the decomposition temperature T of the resin may be measured by the method described in Examples disclosed herein. In the method of producing a negative electrode material sheet for a non-aqueous secondary battery disclosed herein, in a case in which two or more kinds of resins are used, the lowest value among the decomposition temperatures obtained by measuring each of the two or more kinds of resins by the method described in Examples disclosed herein is defined as the decomposition temperature T of the resin.

In the method of producing a negative electrode material sheet for a non-aqueous secondary battery disclosed herein, the calcinating step preferably includes calcinating the secondary sheet at 300°C or higher and 2000°C or lower. When the secondary sheet is calcinated at a temperature within the predetermined range in the calcinating step, the rate characteristics of the secondary battery produced using the negative electrode including the negative electrode material sheet to be produced can be further improved while ensuring a sufficiently high strength of the negative electrode material sheet to be produced.

Further, in the method of producing a negative electrode material sheet for a non-aqueous secondary battery disclosed herein, the particulate carbon material preferably contains scaly graphite. When scaly graphite is used as the particulate carbon material, the rate characteristics of the secondary battery produced using the negative electrode including the negative electrode material sheet to be produced can be further improved.

In the method of producing a negative electrode material sheet for a non-aqueous secondary battery disclosed herein, the particulate carbon material preferably has an aspect ratio of more than 2 and 20 or less. When the particulate carbon material having an aspect ratio within the aforementioned predetermined range is used, the rate characteristics of a secondary battery produced using a negative electrode including the negative electrode material sheet to be produced can be further improved.

Further, in the method of producing a negative electrode material sheet for a non-aqueous secondary battery disclosed herein, the composition preferably further contain a silicon active material. When the composition further containing a silicon active material is used, a secondary battery including the negative electrode material sheet to be produced can be increased in capacity, and the secondary battery can exhibit further excellent rate characteristics, and the increase in the interelectrode distance after repeated charging and discharging can be suppressed.

The negative electrode for a non-aqueous secondary battery disclosed herein includes any of the negative electrode material sheets for a non-aqueous secondary battery described above. The negative electrode for a non-aqueous secondary battery disclosed herein can exhibit excellent rate characteristics in a secondary battery.

Further, it could also be helpful to provide a non-aqueous secondary battery including the aforementioned negative electrode for a non-aqueous secondary battery. The non-aqueous secondary battery disclosed herein includes the aforementioned negative electrode for a non-aqueous secondary battery, and thus exhibits excellent rate characteristics.

### (Advantageous Effect)

According to the present disclosure, it is possible to provide a negative electrode material sheet for a non-aqueous secondary battery capable of forming a negative electrode capable of allowing a non-aqueous secondary battery to exhibit excellent rate characteristics.

Further, according to the present disclosure, it is possible to provide a negative electrode capable of allowing a non-aqueous secondary battery to exhibit excellent rate characteristics.

Further, according to the present disclosure, it is possible to provide a non-aqueous secondary battery capable of exhibiting excellent rate characteristics.

### DETAILED DESCRIPTION

The following provides a detailed description of embodiments disclosed herein.

The negative electrode material sheet for a non-aqueous secondary battery (hereinafter, also simply referred to as "negative electrode material sheet") disclosed herein may be used as a negative electrode mixed material layer of a negative electrode for a non-aqueous secondary battery.

The negative electrode material sheet disclosed herein may be produced using the method of producing a negative electrode material sheet disclosed herein.

The negative electrode for a non-aqueous secondary battery disclosed herein (hereinafter, also simply referred to as "negative electrode") includes the negative electrode material sheet disclosed herein as a negative electrode mixed material layer. That is, the negative electrode material sheet disclosed herein may be used for producing the negative electrode disclosed herein. For example, the negative electrode disclosed herein may be produced by bonding the negative electrode material sheet disclosed herein to a current collector.

Further, the non-aqueous secondary battery disclosed herein (hereinafter, also simply referred to as "secondary battery") includes the negative electrode disclosed herein. That is, the negative electrode disclosed herein may be used for producing the secondary battery disclosed herein.

### (NEGATIVE ELECTRODE MATERIAL SHEET FOR NON-AQUEOUS SECONDARY BATTERY)

The negative electrode material sheet disclosed herein includes a particulate carbon material, and optionally, further includes other components such as a silicon active material, a resin, and a fibrous carbon material. In addition, the negative electrode material sheet disclosed herein has a ratio I(110)/I(004) of a diffraction intensity of a (110) plane relative to a diffraction intensity of a (004) plane in X-ray diffraction of a principal plane thereof equal to or more than a predetermined value. Further, the negative electrode material sheet disclosed herein satisfies at least one of the following conditions: (1) the content of the resin is equal to or less than a predetermined value; and (2) the density is equal to or less than a predetermined value.

The negative electrode material sheet disclosed herein is capable of forming a negative electrode capable of allowing a secondary battery to exhibit excellent rate characteristics.

### <Particulate Carbon Material>

The particulate carbon material is a material capable of occluding and releasing, as a negative electrode active material of a non-aqueous secondary battery, charge carriers such as lithium.

The particulate carbon material is not particularly limited, and for example, a graphite such as artificial graphite, scaly graphite, flaked graphite, natural graphite, acid-treatment graphite, expandable graphite, expanded graphite; carbon black; and the like may be used. These may be used alone in one kind or in combination of two or more kinds.

Among the aforementioned materials, scaly graphite is preferably used as the particulate carbon material. When scaly graphite is used as the particulate carbon material, the rate characteristics of a secondary battery to be produced using a negative electrode including the negative electrode material sheet can be further improved. Examples of scaly graphite include "UP20α" produced by Nippon Graphite Industry Co., Ltd.

### <<Properties of Particulate Carbon Material>>

The particulate carbon material has a volume-average particle diameter of preferably 3 µm or more, more preferably 5 µm or more, further preferably 8 µm or more, still preferably 12 µm or more, even preferably 16 µm or more, particularly preferably 20 µm or more, and preferably 200 µm or less, more preferably 150 µm or less, further preferably 100 µm or less, still preferably 50 µm or less. When the volume-average particle diameter of the particulate carbon material is equal to or larger than the aforementioned lower limit, the density of the negative electrode material sheet is appropriately lowered, which makes it easy for the charge carriers such as lithium to move, so that the rate characteristics of a secondary battery produced using a negative electrode including the negative electrode material sheet can be further improved. On the other hand, when the volume-average particle diameter of the particulate carbon material is equal to or larger than the aforementioned lower limit, the density of the negative electrode material sheet is appropriately increased, so that a secondary battery produced using a negative electrode including the negative electrode material sheet can be increased in capacity.

In the present disclosure, the "volume-average particle diameter" may be measured in accordance with JIS Z8825, and represents a particle diameter in which the cumulative volume calculated from the smaller diameter side is 50% in the particle size distribution (volume-based) measured by the laser diffractometry.

The particulate carbon material has an aspect ratio (major axis/minor axis) of preferably greater than 1.2, more preferably greater than 2, further preferably greater than 4, still preferably greater than 6, and preferably 20 or less, more preferably 15 or less, further preferably 10 or less. When the aspect ratio of the particle carbon material is within the aforementioned predetermined range, the orientation angle θ₁ of the particulate carbon material with respect to the principal plane of the negative electrode material sheet easily falls within a desired range to be described later, making it easy for the charge carriers such as lithium to easily move, and thus the rate characteristics of a secondary batteries produced using a negative electrode including the negative electrode material sheet can be further improved.

Further, the particulate carbon material may be oriented in the negative electrode material sheet at an orientation angle of preferably 45° or more, more preferably 60° or more, further preferably 65° or more, still preferably 70° or more, and preferably 90° or less, with respect to the principal plane of the negative electrode material sheet. When the particulate carbon material is oriented at an orientation angle that falls within the aforementioned predetermined range with respect to the principal plane of the negative electrode material sheet, the charge carriers such as lithium can easily move, and thus the rate characteristics of a secondary batteries produced using a negative electrode including the negative electrode material sheet can be further improved.

### <<Content Ratio of Particulate Carbon Material>>

The content ratio of the particulate carbon material in the negative electrode material sheet is not particularly limited, and may be appropriately adjusted as long as a desired effect disclosed herein can be obtained.

For example, in a case in which the negative electrode material sheet does not contain a silicon active material to be described later, the content ratio of the particulate carbon material in the negative electrode material sheet is preferably 92% by mass or more, more preferably 95% by mass or more, further preferably 97% by mass or more, and may be 100% by mass or less, with the total mass of the negative electrode material sheet being 100% by mass. When the content ratio of the particulate carbon material in the negative electrode material sheet is equal to or higher than the aforementioned lower limit, the rate characteristics of a secondary battery to be produced using a negative electrode including the negative electrode material sheet can be further improved, and the capacity of the secondary battery can also be increased.

Further, for example, in a case in which the negative electrode material sheet further includes a silicon active material to be described later, the content ratio of the particulate carbon material in the negative electrode material sheet is preferably 50% by mass or more, more preferably 60% by mass or more, further preferably 70% by mass or more, still preferably 73% by mass or more, even preferably 77% by mass or more, particularly preferably 80% by mass or more, and preferably 97% by mass or less, more preferably 95% by mass or less, further preferably 90% by mass or less, still preferably 85% by mass or less, with the total mass of the negative electrode material sheet being 100% by mass. When the content ratio of the particulate carbon material in the negative electrode material sheet is within the aforementioned predetermined range, the secondary battery can be sufficiently high in capacity while exhibiting more excellent rate characteristics, and the increase in the interelectrode distance after repeated charging and discharging can be further suppressed.

### <Other Components>

The negative electrode material sheet disclosed herein may further include a component other than the particulate carbon material described above. For example, a silicon active material, a resin, a fibrous carbon material, and the like may be used as other components.

### <Silicon Active Material>

The negative electrode material sheet disclosed herein may further include a silicon active material. The silicon active material functions as a negative electrode active material in a negative electrode mixed material layer formed of the negative electrode material sheet, in the same manner as the particulate carbon material described above. By further using the silicon active material as the negative electrode active material, the capacity of the secondary battery including the negative electrode material sheet can be increased.

Examples of the silicon active material include silicon (Si), an alloy containing silicon, SiO, SiOₓ, and a composite product of a Si containing material obtained by coating or compounding a Si containing material with conductive carbon. These may be used alone in one kind or in combination of two or more kinds.

The alloy containing silicon may be, for example, an alloy composition that contains silicon and at least one element selected from the group consisting of titanium, iron, cobalt, nickel, and copper.

Further, the alloy containing silicon may also be, for example, an alloy composition that contains silicon, aluminum, and transition metals such as iron, and further contains rare-earth elements such as tin and yttrium.

SiOₓ is a compound that contains at least one of SiO and SiO₂, and Si, where x is usually 0.01 or more and less than 2. SiOₓ may then be formed, for example, by disproportionation of silicon monoxide (SiO). Specifically, SiOₓ may be prepared by heat treating SiO, optionally in the presence of a polymer such as polyvinyl alcohol, to produce silicon and silicon dioxide. SiO may be heat treated at a temperature of 900°C or higher, and preferably 1000°C or higher, in an atmosphere containing organic gas and/or vapor, after SiO has been pulverized and mixed with the optional polymer.

The composite of a Si-containing material and conductive carbon may be, for example, a compound obtained by heat-treating a pulverized mixture of SiO, a polymer such as polyvinyl alcohol, and optionally a carbon material, in an atmosphere containing, for example, organic gas and/or vapor. Further, a commonly known method may be used to obtain the aforementioned composite, such as a method of coating the surfaces of particles of SiO with organic gas or the like by chemical vapor deposition, or a method of forming composite particles (granulation) by a mechanochemical process using SiO particles and graphite or artificial graphite.

In terms of further increasing the capacity of secondary batteries, the silicon active material is preferably an alloy containing silicon and SiOₓ.

### <<Orientation Angle>>

The silicon active material is oriented with respect to the principal plane of the negative electrode material sheet at an orientation angle of preferably 45° or more and 90° or less, more preferably 50° or more, further preferably 55° or more, and still preferably 59° or more, in a cross section in the thickness direction of the negative electrode material sheet. When the silicon active material is oriented at the orientation angle θ₂ of 45° or more, the rate characteristics of the secondary batteries including the negative electrode material can be further improved, and an increase in the interelectrode distance after repeated charging and discharging can be suppressed.

### «Volume-Average Particle Diameter»

The silicon active material has a volume-average particle diameter of preferably 0.1 µm or more, more preferably 1 µm or more, and preferably 100 µm or less, more preferably 10 µm or less, further preferably 5 µm or less. When the silicon active material has a volume-average particle diameter of 0.1 µm or more, the density of the negative electrode material sheet is appropriately reduced, making it easy for the charge carriers to move in the thickness direction of a negative electrode mixed material layer made of the negative electrode material sheet, which can further improve the rate characteristics of the secondary battery. On the other hand, when the silicon active material has a volume-average particle diameter of 100 µm or less, the density of the negative electrode mixed material layer made of the negative electrode material sheet is appropriately increased, whereby the capacity of the secondary battery can be further increased.

### «Aspect Ratio»

The aspect ratio (major axis/minor axis) of the silicon active material is greater than 1, preferably 1.1 or more, more preferably 1.5 or more, and preferably 7 or less, more preferably 5 or less, further preferably 3 or less. When the aspect ratio of the silicon active material is within the predetermined range, the orientation angular θ₂ of the silicon active material with respect to the principal plane of the negative electrode material can be easily adjusted to be in the aforementioned desired range, and the rate characteristics of the secondary batteries can be further improved. Further, the increase in the interelectrode distance after repeated charging and discharging can be further suppressed.

### <<Content Quantity Ratio>>

Here, in the negative electrode material sheet, the volume of the silicon active material is preferably 5% by volume or more, more preferably 7% by volume or more, further preferably 13% by volume or more, and preferably 30% by volume or less, more preferably 25% by volume or less, further preferably 20% by volume or less, with the total volume of the particulate carbon material and the silicon active material (total volume of the negative electrode active material) being 100% by volume. When the proportion of the silicon active material to the total volume of the particulate carbon material and the silicon active material is 5% by volume or more, the capacity of the secondary battery can be further increased. On the other hand, when the proportion of the silicon active material to the total volume of the particulate carbon material and the silicon active material is 30% by volume or less, it is possible to further suppress an increase in the interelectrode distance after repeated charging and discharging of the secondary battery and to further improve the rate characteristics of the secondary battery.

### <<Content Ratio>>

The active material in the negative polarity material sheet is contained at a content ratio of preferably 3% by mass or more, more preferably 5% by mass or more, further preferably 10% by mass or more, still preferably 15% by mass or more, and preferably 50% by mass or less, more preferably 40% by mass or less, further preferably 30% by mass or less, still preferably 27% by mass or less, even preferably 23% by mass or less, particularly preferably 20% by mass or less, with the total mass of the negative polar material sheet being 100% by mass. When the content ratio of the particulate carbon material in the negative electrode material sheet is within the aforementioned predetermined range, a secondary battery can exhibit further excellent rate characteristics while being further increased in the capacity of the secondary battery, and the increase in the interelectrode distance after repeated charging and discharging can be further suppressed.

### <<Resin>>

The resin to be optionally included in the negative electrode material sheet disclosed herein is not particularly limited, and may be, for example, a part of the resin used for shaping the primary sheet and the secondary sheet, which are precursors of the negative electrode material sheet, and remained without getting burned in the calcinating step in a method of producing a negative electrode material sheet to be described later. The negative electrode material sheet obtained by using a method of producing a negative electrode material sheet described later may contain a resin, a residue of calcination of a resin, or both a resin and a residue of calcination thereof.

Specific examples of the resin that may be included in the negative electrode material sheet include resins to be described later in the section "Method of Producing a Negative Electrode Material Sheet for a Non-Aqueous Secondary Battery".

The content ratio of the resin in the negative electrode material sheet will be described later.

### <<Fibrous Carbon Material>>

The fibrous carbon material to be optionally included in the negative electrode material sheet is a material capable of improving the strength of the negative electrode material sheet.

The fibrous carbon material is not particularly limited, and examples thereof may include carbon nanotubes, vapor grown carbon fibers, carbon fibers obtained by carbonizing organic fibers, and chopped products thereof. These may be used alone in one kind or in combination of two or more kinds.

Here, among the aforementioned examples, a fibrous carbon nanostructure such as carbon nanotubes is preferably used as the fibrous carbon material, and a fibrous carbon nanostructure including carbon nanotubes is more preferably used. The use of fibrous carbon nanostructures such as carbon nanotubes can further improve the strength of the negative electrode material sheet.

### -Fibrous Carbon Nanostructures including Carbon Nanotubes-

The fibrous carbon nanostructures including carbon nanotubes, which may be suitably used as the fibrous carbon material, may be composed solely of carbon nanotubes (hereinafter also referred to as "CNTs") or may be a mixture of CNTs and fibrous carbon nanostructures other than CNTs.

Any type of CNTs may be used in the fibrous carbon nanostructures, such as, for example, single-walled carbon nanotubes and/or multi-walled carbon nanotubes, with single- to up to 5-walled carbon nanotubes being preferred, and single-walled carbon nanotubes being more preferred.

The fibrous carbon nanostructure containing CNT has a mean diameter of preferably 0.5 nm or more, more preferably 1 nm or more, and preferably 15 nm or less, and more preferably 10 nm or less. When the mean diameter of the fibrous carbon nanostructures is within the aforementioned predetermined range, the negative electrode material sheet can be further increased in strength.

The fibrous carbon nanostructure containing CNT preferably has a mean length of 100 µm or more and 5000 µm or less. When the mean length of the fibrous carbon nanostructure containing CNT is within the aforementioned range, the negative electrode material-sheet can be further increased in strength.

The "mean diameter of the fibrous carbon nanostructures" and the "mean length of the fibrous carbon nanostructures" may be determined, respectively by measuring the diameter (outer diameter) and the length of 100 randomly selected fibrous carbon nanostructures using a transmission electron microscope. The mean diameter and the mean length of the fibrous carbon nanostructures containing CNT may be adjusted by changing the production method or the production conditions of the fibrous carbon nanostructures containing CNT, or by combining a plurality of types of fibrous carbon nanostructures containing CNT obtained by different production methods.

The fibrous carbon nanostructure containing a CNT having the aforementioned properties can be efficiently produced, for example, in accordance with a method (Super Growth Method; see WO2006/011655A) which provides a trace amount of an oxidizing agent (catalyst activating material) in the system when a raw material compound and a carrier gas are supplied onto a substrate having a catalyst layer for producing carbon nanotubes thereon to synthesize CNT by a chemical vapor deposition method (CVD method), to thereby dramatically improve the catalytic activity of the catalyst layer. Hereinafter, carbon nanotubes obtained by the super growth method may also be referred to as "SGCNTs."

Here, the fibrous carbon nanostructures including CNTs produced by the super growth method may be composed solely of SGCNTs or may include, in addition to SGCNTs, other carbon nanostructures such as non-cylindrical carbon nanostructures.

BET specific surface area of the fibrous carbon nanostructure containing CNT is preferably 400 m²/g or more, more preferably 600 m²/g or more, further preferably 800 m²/g or more, and preferably 2500 m²/g or less, more preferably 1200 m²/g or less. When BET specific surface area of the fibrous carbon-nanostructure containing CNT is within the aforementioned predetermined range, the negative electrode material-sheet can be further increased in strength.

### -Aspect Ratio of Fibrous Carbon Material-

The aspect ratio (major axis/minor axis) of the fibrous carbon material is preferably greater than 20, and more preferably greater than 50. When the aspect ratio of the fibrous carbon material is greater than 20, the negative electrode material sheet can be further improved in strength.

In the present disclosure, the "aspect ratio" of the fibrous carbon material may be measured in the same manner as the "aspect ratio" of the particulate carbon material described above.

### -Content Ratio of Fibrous Carbon Material-

In a case in which the negative electrode material sheet disclosed herein contains a fibrous carbon material, the content ratio of the fibrous carbon material in the negative electrode material sheet is preferably 0.1% by mass or more, more preferably 0.2% by mass or more, further preferably 0.4% by mass or more, and preferably 5% by mass or less, more preferably 2.5% by mass or less, further preferably 1% by mass or less. When the content ratio of the fibrous carbon material in the negative electrode material sheet is equal to or higher than the aforementioned lower limit, the negative electrode material sheet can be further increased in strength. On the other hand, when the content ratio of the fibrous carbon material in the negative electrode material sheet is equal to or lower than the aforementioned upper limit, the content ratio of the particulate carbon material in the negative electrode material sheet can be secured sufficiently high, so that the secondary battery produced using the negative electrode including the negative electrode material sheet can be sufficiently high in capacity.

Here, in a case in which the negative electrode material sheet further includes a silicon active material, the fibrous carbon material can improve the strength of the negative electrode material sheet as described above, and thus, when the negative electrode material sheet includes the fibrous carbon material, an increase in the interelectrode distance after repeated charging and discharging can be suppressed. From the viewpoint of suppressing the increase in the interelectrode distance, the content ratio of the fibrous carbon material in the negative electrode material sheet further containing the silicon active material is preferably 0.1% by mass or more and 5% by mass or less, more preferably 0.2% by mass or more and 5% by mass or less, further preferably 0.4% by mass or more and 5% by mass or less, with the total mass of the negative electrode material sheet being 100% by mass.

On the other hand, from the viewpoint of increasing the capacity of the secondary battery and further improving the rate characteristics of the secondary battery, the amount of the fibrous carbon material contained in the negative electrode material sheet is preferably reduced. From the viewpoint of improving the capacity and rate characteristics of the secondary battery, the content ratio of the fibrous carbon material in the negative electrode material sheet further containing the silicon active material is preferably 2.5% by mass or less, more preferably 1% by mass or less, further preferably 0.5% by mass or less, particularly preferably 0.1% by mass or less, and most preferably 0% by mass (i.e., the negative electrode material sheet does not contain the fibrous carbon material), with the total mass of the negative electrode material sheet being 100% by mass.

### <Ratio I(110)/I(004) of Diffraction Intensity of Principal Plane of Negative Electrode Material Sheet>

The ratio I(110)/I(004) of the diffraction intensity of the (110) plane relative to the diffraction intensity of the (004) plane in the X-ray diffraction of the principal plane of the negative electrode material sheet disclosed herein needs to be 1.1 or more, preferably 3 or more, more preferably 5 or more, further preferably 10 or more, and still preferably 20 or more.

Here, in the X-ray diffraction pattern of the particulate carbon material as the negative electrode active material, a peak attributed to the (004) plane and a peak attributed to the (110) plane are detected. The (110) plane in the crystal structure of the particle carbon material is a plane perpendicular to a plane composed of a carbon six-membered ring (i.e., a plane equivalent to the (004) plane), and thus the ratio of the peak intensity of the (110) plane and the peak intensity of the (004) plane in the X-ray diffraction indicates the crystal orientation of the particulate carbon material. When the value of I(110)/I(004) is high in the X-ray diffraction of the principal plane of the negative electrode material sheet, it indicates that the orientation of the (004) plane is high relative to the direction perpendicular to the principal plane of the negative electrode material sheet (typically, the direction perpendicular to the principal plane of the current collector of the negative electrode including the negative electrode material sheet).

Accordingly, when the ratio I(110)/I(004) of the diffraction intensity is equal to or greater than the aforementioned predetermined value, the orientation of the (004) plane is enhanced in the direction perpendicular to the principal plane of the negative electrode material sheet, and thus the charge carriers such as lithium can easily move, so that the secondary battery produced using the negative electrode including the negative electrode material sheet can exhibit excellent rate characteristics.

The diffraction intensity ratio I(110)/I(004) is preferably 90 or less, without being particularly limited.

The ratio I(110)/I(004) of the diffraction intensity may be adjusted based on, for example, a step performed in a method of producing a negative electrode material sheet to be described later, a property (for example, an aspect ratio) of the particulate carbon material to be used, a shaping condition including a film thickness of a primary sheet to be described later, and a calcinating condition (for example, temperature and time).

### <(1) Content Ratio of Resin and (2) Density>

The negative electrode material sheet disclosed herein needs to satisfy at least one of (1) and (2) below.
(1) The negative electrode material sheet contains a resin at a content ratio of 8% by mass or less.
(2) The negative electrode material sheet has a density of less than 1.3 g/cm³.

When the negative electrode material sheet disclosed herein satisfies at least one of (1) and (2), the charge carriers such as lithium can easily move, and therefore, the secondary battery produced using the negative electrode including the negative electrode material sheet can exhibit excellent rate characteristics.

From the viewpoint of further improving the rate characteristics of the secondary battery, the negative electrode material sheet disclosed herein preferably satisfies both (1) and (2) described above.

### «(1) Content Ratio of Resin»

In a case in which the negative electrode material sheet disclosed herein satisfies the above (1), the content ratio of the resin in the negative electrode material sheet needs to be 8% by mass or less, and is preferably 3% by mass or less and more preferably 1% by mass or less. When the content ratio of the resin in the negative electrode material sheet is equal to or less than the aforementioned predetermined value, the amount of the resin which may otherwise hinder the movement of the charge carriers such as lithium is reduced, and therefore, the charge carriers can easily move, so that the secondary battery produced using the negative electrode including the negative electrode material sheet can exhibit excellent rate characteristics.

The content ratio of the resin in the negative electrode material sheet may be 0% by mass or more, without being particularly limited.

From the viewpoint of further improving the rate characteristics of the secondary battery, the content ratio of the resin in the negative electrode material sheet is particularly preferably 0% by mass.

The content ratio of the resin in the negative electrode material sheet may be adjusted based on, for example, a step performed in a method of producing a negative electrode material sheet to be described later, the type and amount of the resin to be used, and conditions of calcination (for example, temperature and time).

### «(2) Density»

In a case in which the negative electrode material sheet satisfies the above (2), the negative electrode material sheet needs to have a density of 1.3 g/cm³ or less, and is preferably 1.26 g/cm³ or less and more preferably 1.23 g/cm³ or less. When the density of the negative electrode material sheet is equal to or less than the aforementioned predetermined value, the voids in the negative electrode material sheet increase, and thus the charge carriers such as lithium can easily move, so that the secondary battery produced using the negative electrode including the negative electrode material sheet can exhibit excellent rate characteristics. Further, when the density of the negative electrode material sheet is equal to or less than the aforementioned predetermined value, the voids in the negative electrode material sheet increase, and thus the electrolyte injection characteristics can be enhanced in the secondary battery produced by using the negative electrode including the negative electrode material sheet.

The density of the negative electrode material is preferably 0.7 g/cm³ or more, more preferably 0.85 g/cm³ or more, and further preferably 1.05 g/cm³ or more, without being particularly limited. When the density of the negative electrode material sheet is equal to or higher than the aforementioned lower limit, the strength of the negative electrode material sheet can be secured sufficiently high. Further, when the density of the negative electrode material sheet is equal to or higher than the lower limit, the secondary battery produced using the negative electrode including the negative electrode material sheet can have a higher capacity.

In a case in which the negative electrode material sheet disclosed herein further includes a silicon active material, the density of the negative electrode material sheet is preferably 1.30 g/cm³ or less, more preferably 1.26 g/cm³ or less, further preferably 1.23 g/cm³ or less, still preferably 1.05 g/cm³ or less, and particularly preferably 0.90 g/cm³ or less, from the viewpoint of further suppressing the increase in the interelectrode distance after repeated charging and discharging while further improving the rate characteristics of the secondary battery.

Further, in a case in which the negative electrode material sheet disclosed herein further includes a silicon active material, the density of the negative electrode material sheet is preferably 0.70 g/cm³ or more, more preferably 0.90 g/cm³ or more, further preferably 1.10 g/cm³ or more, from the viewpoint of improving the strength of the negative electrode material sheet, while the density is preferably 0.60 g/cm³ or more, and more preferably 0.70 g/cm³, from the viewpoint of increasing the capacity of the secondary battery. The density of the negative electrode material sheet may be adjusted based on, for example, a step performed in a method of producing a negative electrode material sheet to be described later, a type, a property, and an amount ratio of the resin and the particulate carbon material to be used, a condition of calcination (for example, temperature and time), and the like.

### <Thickness>

The thickness of the negative electrode material sheet is preferably 80 µm or more, more preferably 90 µm or more, further preferably 100 µm or more, and preferably 500 µm or less, more preferably 300 µm or less, further preferably 200 µm or less. When the thickness of the negative electrode material sheet is equal to or greater than the aforementioned lower limit, the capacity can be increased in the secondary battery produced using the negative electrode including the negative electrode material sheet. On the other hand, when the thickness of the negative electrode material sheet is equal to or less than the aforementioned upper limit, the secondary battery produced using the negative electrode including the negative electrode material sheet can be made thinner.

### <Areal Weight>

The areal weight of the negative electrode material is preferably 7.5 g/cm² or more, more preferably 9 g/cm² or more, further preferably 11 g/cm² or more, and still preferably 12 g/cm² or more. When the areal weight of the negative electrode material sheet is equal to or greater than the aforementioned predetermined value, the secondary battery produced using the negative electrode including the negative electrode material sheet can have a higher capacity.

The areal weight of the negative electrode material is preferably 30 g/cm² or less, and more preferably 15 g/cm² or less, without being particularly limited. When the areal weight of the negative electrode material sheet is equal to or less than the aforementioned predetermined value, the charge carriers such as lithium can easily move, and thus the rate characteristics can be sufficiently secured high in the secondary battery produced using the negative electrode including the negative electrode material sheet.

In a case in which the negative electrode material further includes a silicon active material, the areal weight is preferably 30.0 mg/cm² or less, more preferably 15.0 mg/cm² or less, and further preferably 10.0 mg/cm² or less, from the viewpoint of suppressing the increase in the interelectrode distance after repeated charging and discharging while further improving the rate characteristics of the secondary battery. When the areal weight of the negative electrode material sheet is 30.0 mg/cm² or less, the voids in the negative electrode material sheet increase, which facilitates the movement of charge carriers in the thickness direction of the negative electrode mixed material layer formed of the negative electrode material sheet, so that the rate characteristics can be further improved in the secondary battery. In addition, when the areal weight of the negative electrode material sheet is 30.0 mg/cm² or less, an increase in the interelectrode distance after repeated charging and discharging of the secondary battery can be suppressed, as is presumed that the voids in the negative electrode material sheet increase.

On the other hand, in a case in which the negative electrode material sheet further includes a silicon active material, the areal weight of the negative electrode material sheet is preferably 6.0 mg/cm² or more, more preferably 7.0 mg/cm² or more, and further preferably 10.0 mg/cm² or more, from the viewpoint of improving the strength of the negative electrode material sheet.

Further, in a case in which the negative electrode material sheet further includes a silicon active material, the areal weight of the negative electrode material sheet is preferably 6.0 mg/cm² or more, and more preferably 7.0 mg/cm² or more, from the viewpoint of further increasing the capacity of the secondary battery.

In the present disclosure, the areal weight of the negative electrode material sheet may be measured by the method described in Examples disclosed herein.

### (Method of Producing Negative Electrode Material Sheet for Non-Aqueous Secondary Battery)

A method of producing a negative electrode material sheet disclosed herein includes (A) a primary sheet shaping step of pressing a composition including a resin and a particulate carbon material into a sheet shape, to thereby obtain a primary sheet; (B) a laminate forming step of stacking a plurality of the primary sheets in a thickness direction, or folding or winding the primary sheet, to thereby obtain a laminate; (C) a slicing step of slicing the laminate at an angle of 45° or less with respect to a stacking direction, to thereby obtain a secondary sheet; and (D) calcinating step of calcinating the secondary sheet.

The method of producing the negative electrode material sheet disclosed herein may optionally further include other steps than the above steps (A) to (D).

The method of producing a negative electrode material sheet disclosed herein enables to produce a negative electrode material sheet capable of forming a negative electrode that would allow a secondary battery to exhibit excellent rate characteristics.

The method of producing a negative electrode material sheet disclosed herein is capable of efficiently producing the aforementioned negative electrode material sheet disclosed herein.

According to PTLs 2 and 3, as described above, in the preparation of a negative electrode, a paste containing a particulate carbon material and a silicon active material is applied onto a current collector, and a magnetic field is applied to the applied paste, whereby the particulate carbon material is oriented in a predetermined direction in the obtained negative electrode mixed material layer. However, according to PTLs 2 and 3, no consideration is given to anisotropy and orientation control of the silicon active material, and in the method described in these literatures, the orientation of the particulate carbon material and the silicon active material cannot be controlled simultaneously. The reason for this is not clear, but it may be attributed to that the difference in magnetic modulus between the particulate carbon material and the silicon active material would make it difficult to control the orientation of these materials simultaneously.

In contrast, according to the method of producing the negative electrode material sheet including the steps (A) to (D) described above, in a case in which a composition that contains, in addition to a resin and a particulate carbon material, a silicon active material is used in the primary sheet shaping step (A), a negative electrode material sheet in which the particulate carbon material and the silicon active material are both oriented at an orientation angle of 45° or more and 90° or less can be efficiently produced.

### <(A) Primary Sheet Shaping Step>

In the primary sheet shaping step, a composition containing a resin and a particulate carbon material is pressurized into a sheet shape, thereby providing a primary sheet.

### <<Composition>>

The aforementioned composition includes a resin and a particulate carbon material. The composition may further include a silicon active material and a fibrous carbon material. The composition may further include components (other components) other than the aforementioned resin, particulate carbon material, silicon active material, and fibrous carbon material.

### -Resin-

The resin is not particularly limited, and any resin may be used. For example, a liquid resin and a solid resin may both be used as the resin. These resins may be used alone in one kind or in combination of two or more kinds. For example, a liquid resin and a solid resin may both be used as the resin. In a case in which a liquid resin and a solid resin are used in combination as the resin, the ratio by mass between the liquid resin and the solid resin may be adjusted as long as a desired effect disclosed herein can be obtained. As the content ratio of the liquid resin in the entire resin is higher, the filling rate of the particulate carbon material in the primary sheet can be easily increased. On the other hand, as the content ratio of the solid resin in the entire resin is higher, the strength of the primary sheet can be increased.

### =Liquid Resin=

The liquid resin is not particularly limited as long as being liquid under ordinary temperature and normal pressure, and for example, a thermoplastic resin that is liquid under ordinary temperature and normal pressure may be used.

In the present disclosure, "ordinary temperature" refers to 23°C, and "normal pressure" refers to 1 atm (absolute pressure).

Examples of the liquid resins include, for example, a fluororesin, a silicone resin, an acrylic resin, an epoxy resin, and an acrylonitrile-butadiene copolymer (nitrile rubber). These may be used alone in one kind or in combination of two or more kinds.

### =Solid Resin=

The solid resin is not particularly limited as long as it is not liquid under ordinary temperature and normal pressure, and for example, a thermoplastic resin that is solid under ordinary temperature and normal pressure, a thermosetting resin that is solid under ordinary temperature and normal pressure, or the like, may be used.

Examples of the thermoplastic resin that is solid under ordinary temperature and normal pressure may include: acrylic resins such as poly(2-ethylhexyl acrylate), copolymers of acrylic acid and 2-ethylhexyl acrylate, polyacrylic acid or esters thereof, polyacrylic acid or esters thereof; silicone resins; fluororesins; polyethylene; polypropylene; ethylene-propylene copolymers; polymethylpentene; polyvinyl chloride; polyvinylidene chloride; polyvinyl acetate; ethylene-vinyl acetate copolymers; polyvinyl alcohol; polyacetal; polyethylene terephthalate; polybutylene terephthalate; polyethylene naphthalate; polystyrene; polyacrylonitrile; styrene-acrylonitrile copolymers; acrylonitrile-butadiene copolymers (nitrile rubber); acrylonitrile-butadiene-styrene copolymers (ABS resin); styrene-butadiene block copolymers or hydrogenated products thereof; styrene-isoprene block copolymers or hydrogenated products thereof; polyphenylene ethers; modified polyphenylene ethers; aliphatic polyamides; aromatic polyamides; polyamideimides; polycarbonates; polyphenylene sulfides; polysulfones; polyether sulfones; polyether nitriles; polyether ketones; polyketones; polyurethanes; liquid crystal polymers; ionomers; and the like. These may be used alone in one kind or in combination of two or more kinds.

As used herein, "resin" encompasses rubbers.

Examples of the thermosetting resin that is solid under ordinary temperature and normal pressure may include: natural rubber; butadiene rubber; isoprene rubber; nitrile rubber; hydrogenated nitrile rubber; chloroprene rubber; ethylene propylene rubber; chlorinated polyethylene; chlorosulfonated polyethylene; butyl rubber; halogenated butyl rubber; polyisobutylene rubber; epoxy resins; polyimide resins; bismaleimide resins; benzocyclobutene resins; phenolic resins; unsaturated polyester; diallyl phthalate resins; polyimide silicone resins; polyurethane; thermosetting polyphenylene ether; thermosetting modified polyphenylene ether; and the like. These may be used alone in one kind or in combination of two or more kinds.

### -Particulate Carbon Material-

As the particle carbon material, the particulate carbon material described above in the section of "Negative Electrode Material Sheet for Non-Aqueous Secondary Battery" may be used.

The content of the particulate carbon material in the composition is preferably 50 parts by mass or more, more preferably 80 parts by mass or more, further preferably 120 parts by mass or more, still preferably 180 parts by mass or more, even preferably 250 parts by mass or more, and preferably 500 parts by mass or less, more preferably 450 parts by mass or less, further preferably 400 parts by mass or less, with respect to 100 parts by mass of the resin. When the content of the particulate carbon material in the composition is equal to or higher than the aforementioned lower limit, the density of the negative electrode material sheet to be produced can be appropriately increased, which improves the strength of the negative electrode material sheet while increasing the capacity of the secondary battery to be produced using the negative electrode including the negative electrode material sheet. On the other hand, when the content of the particulate carbon material in the composition is equal to or less than the aforementioned upper limit, the density of the negative electrode material sheet to be produced can be appropriately reduced, which further improves the rate characteristics of the secondary battery to be produced using the negative electrode including the negative electrode material sheet while enhancing the electrolyte injection property of the secondary battery.

The volume of the particle carbon material in the composition is preferably 25% by volume or more, preferably 37% by volume or more, more preferably 45% by volume or more, further preferably 53% by volume or more, and preferably 75% by volume or less, more preferably 70% by volume or less, further preferably 65% by volume or less, with respect to the total volume of the resin and the particulate carbon material. When the ratio of the volume of the particle carbon material to the total volume of the resin and the particulate carbon material in the composition is equal to or higher than the aforementioned lower limit, the density of the negative electrode material sheet to be produced can be appropriately increased, which improves the strength of the negative electrode material sheet while increasing the capacity of the secondary battery to be produced using the negative electrode including the negative electrode material sheet. On the other hand, when the ratio of the volume of the particle carbon material to the total volume of the resin and the particulate carbon material in the composition is equal to or less than the above upper limit, the density of the negative electrode material sheet to be produced can be appropriately reduced, and the rate characteristics of the secondary battery produced using the negative electrode including the negative electrode material sheet can be further improved, and the electrolyte injection property of the secondary battery can be enhanced.

### -Silicon Active Material-

As the silicon active material, the silicon active material described above in the section of "Negative Electrode Material Sheet for Non-Aqueous Secondary Battery" may be used.

The quantity ratio between the particulate carbon material and the silicon active material in the composition may be appropriately determined in accordance with the desired amount ratio in the negative electrode material sheet to be fabricated.

In a case in which the composition further contains a silicon active material, the total content of the particulate carbon material and the silicon active material in the composition is preferably 50 parts by mass or more, more preferably 80 parts by mass or more, further preferably 100 parts by mass or more, and preferably 500 parts by mass or less, further preferably 450 parts by mass or less, still preferably 400 parts by mass or less, with respect to 100 parts by mass of the resin. When the total content of the particulate carbon material and the silicon active material in the composition is 50 parts by mass or more per 100 parts by mass of the resin, the density of the negative electrode material sheet to be produced can be appropriately increased, which improves the strength of the negative electrode material sheet while further increasing the capacity of the secondary battery to be produced using the negative electrode including the negative electrode material sheet. On the other hand, when the total content of the particulate carbon material and the silicon active material in the composition is 500 parts by mass or less per 100 parts by mass of the resin, the density of the negative electrode material sheet to be produced can be appropriately lowered, which further improves the rate characteristics of the secondary battery to be produced using the negative electrode including the negative electrode material sheet while suppressing the increase in the interelectrode distance after repeated charging and discharging.

### -Fibrous Carbon Material-

As the fibrous carbon material, the fibrous carbon material described above in the section of "Negative Electrode Material Sheet for Non-Aqueous Secondary Battery" may be used.

The content of the fibrous carbon material in the composition is preferably 0.1 parts by mass or more, more preferably 0.5 parts by mass or more, further preferably 1 part by mass or more, and preferably 10 parts by mass or less, more preferably 5 parts by mass or less, further preferably 2 parts by mass or less, with respect to 100 parts by mass of the resin. When the content of the fibrous carbon material in the composition is equal to or higher than the aforementioned lower limit, the strength of the negative electrode material sheet to be produced can be increased. On the other hand, when the content of the fibrous carbon material in the composition is equal to or less than the aforementioned upper limit, the content ratio of the particulate carbon material in the negative electrode material sheet to be produced can be secured sufficiently high, which can sufficiently increase the capacity of the secondary battery to be produced using the negative electrode including the negative electrode material sheet.

The content of the fibrous carbon material in the composition is preferably 0.1 parts by mass or more, more preferably 0.2 parts by mass or more, further preferably 0.4 parts by mass or more, and preferably 5 parts by mass or less, more preferably 2 parts by mass or less, further preferably 1 part by mass or less, with respect to 100 parts by mass of the particulate carbon material. When the content of the fibrous carbon material in the composition is equal to or higher than the aforementioned lower limit, the strength of the negative electrode material sheet to be produced can be increased. On the other hand, when the content of the fibrous carbon material in the composition is equal to or less than the aforementioned upper limit, the content ratio of the particulate carbon material in the negative electrode material sheet to be produced can be secured sufficiently high, which can sufficiently increase the capacity of the secondary battery produced using the negative electrode including the negative electrode material sheet.

### -Other Components-

The composition may further include other components than the aforementioned resin, particulate carbon material, silicon active material, and fibrous carbon material. As the other components, for example, a dispersant may be used. The dispersant is not particularly limited, and known dispersants may be used. The content of the dispersant in the composition may be adjusted as long as the desired effect disclosed herein can be obtained.

### -Preparation of Composition-

The composition may be prepared by mixing the aforementioned components, without particularly limited.

The mixing of the aforementioned components is not particularly limited, and may be performed using a known mixing device, such as a kneader; a mixer such as a Henschel mixer, a Hobart mixer, or a high-speed mixer; a twin-screw kneader; and a roll. The mixing may also be performed in the presence of a solvent such as ethyl acetate. The resin may be dissolved or dispersed in the solvent in advance so as to be prepared as a resin solution, and mixed with a particulate carbon material, an optionally added silicon active material, a fibrous carbon material, and other components. In a case in which a fibrous carbon nanostructure containing CNT is used as the fibrous carbon material, a masterbatch may be obtained by preparing a dispersion obtained by dispersing a fibrous carbon nanostructure containing CNT and a dispersant in a solvent such as methyl ethyl ketone, and then adding a small amount of a resin to the dispersion and distilling off the solvent, and the masterbatch thus obtained may be mixed with the resin and the particulate carbon material. The mixing time may be, for example, 5 minutes or more and 60 minutes or less. The mixing temperature may be, for example, 5°C or more and 150°C or less.

### <<Shaping of Composition>>

The composition prepared as described above may be optionally defoamed and crushed, and then pressurized into a sheet shape. The composition thus pressure-shaped into a sheet shape may be obtained as a primary sheet. In a case in which solvent has been used during the mixing, the solvent may be preferably removed before shaping the composition into a sheet. For example, when defoaming is performed under vacuum, the solvent can be removed simultaneously with the defoaming.

Here, the composition may be shaped into a sheet by any method without particularly limited, as long as the method applies pressure to the composition. Such method may include a known shaping method such as press shaping, roll shaping, or extrusion shaping. In particular, the composition is preferably shaped into a sheet by roll shaping (primary processing), and more preferably shaped into a sheet by passing between rolls in a state of being sandwiched between protective films. The protective film is not particularly limited, and a polyethylene terephthalate (PET) film subjected to sand blasting treatment or the like may be used. In addition, the roll temperature may be 5°C or more and 150°C or less, the roll gap may be 50 µm or more and 2500 µm or less, the roll linear pressure may be 1 kg/cm or more and 3000 kg/cm or less, and the roll velocity may be 0.1 m/min. or more and 20 m/min. or less.

### <(B) Laminate Forming Step>

In the laminate forming step, a plurality of primary sheets obtained in the primary sheet shaping step are stacked in the thickness direction, or the primary sheet is folded or wound, to thereby obtain a laminate that has a plurality of primary sheets containing a resin and a particulate carbon material formed in the thickness direction. Here, the formation of the laminate by folding the primary sheet is not particularly limited, and may be performed by folding the primary sheet at a constant width using a folding machine. Further, the formation of the laminate by winding the primary sheet is not particularly limited, and may be performed by winding the primary sheet around an axis parallel to the lateral direction or the longitudinal direction of the primary sheet. The formation of the laminate by stacking the primary sheet is not particularly limited, and may be performed using a stacking apparatus. For example, a sheet stacking apparatus (product name: "Hi-Stacker", produced by Nikkiso Co., Ltd.) may used, which makes it possible to prevent air from entering between the layers, to thereby efficiently obtain a favorable laminate.

In the laminate forming step, the obtained laminate may preferably be pressurized (secondary pressurization) in the stacking direction while being heated. By performing the secondary pressurization for pressurizing the laminate in the stacking direction while heating, fusion between the primary sheets stacked may be enhanced.

Here, the pressure at the time of pressurizing the laminate in the stacking direction may be 0.05 MPa or more and 0.50 MPa or less.

The heating temperature of the laminate may preferably be 50°C or more and 170°C or less, without being particularly limited.

Further, the heating time of the laminate may be, for example, 10 seconds or more and 30 minutes or less.

In the laminate obtained by stacking, folding, or winding the primary sheet, the particulate carbon material and the silicon active material are presumably oriented in a direction substantially orthogonal to the stacking direction. For example, in a case in which the particulate carbon material has a scaly shape, the direction of the major axis of the principal plane of the scaly shape is presumably substantially orthogonal to the stacking direction.

### <(C) Slicing Step>

In the slicing step, the laminate is sliced at an angle of 45° or less with respect to the stacking direction to obtain a secondary sheet composed of sliced pieces of the laminate. Any method may be used to slice the laminate, without particularly limited. For example, a multi-blade method, a laser processing method, a water jet method, or a knife processing method may be used. Of those methods, a knife processing method may be preferred, from the viewpoint of easily making uniform the thickness of the secondary sheet. Any cutting tool may be used to slice the laminate, without particularly limited. For example, a slicing member which has a smooth disk surface with a slit and a blade protruding from the slit (for example, a plane or slicer equipped with a sharp blade) may be used.

The laminate may be sliced at an angle of preferably 30° or less with respect to the stacking direction, more preferably 15° or less with respect to the stacking direction, and preferably approximately 0° with respect to the stacking direction (that is, in a direction along the stacking direction).

In the secondary sheet thus obtained, the particulate carbon material and the silicon active material are favorably oriented in the thickness direction. For example, in a case in which the particulate carbon material has a scaly shape, the direction of the major axis of the principal plane of the scaly shape substantially coincides with the thickness direction of the secondary sheet.

### <(D) Calcinating Step>

In the calcinating step, the secondary sheet is calcinated to burn and remove the resin contained in the secondary sheet, thereby obtaining a negative electrode material sheet.

The negative electrode material sheet thus obtained is a sheet obtained by removing a resin from the aforementioned secondary sheet. Therefore, in the negative electrode material sheet, the particulate carbon material and the silicon active material are favorably oriented in the thickness direction. For example, in a case in which the particulate carbon material has a scaly shape, the direction of the major axis of the principal plane of the scaly shape substantially coincides with the thickness direction of the secondary sheet.

Here, the heating temperature in calcinating the secondary sheet is preferably T-50°C or higher, more preferably T-40°C or higher, further preferably T-20°C or higher, and preferably T+2000°C or lower, more preferably T+1500°C or lower, further preferably T+1000°C or lower, when the resin contained in the secondary sheet has a decomposition temperature at T°C. When the heating temperature in calcinating the secondary sheet is equal to or higher than the aforementioned lower limit, the content ratio of the resin in the negative electrode material sheet to be produced can be reduced, and the rate characteristics can be further improved in the secondary battery to be produced using the negative electrode including the negative electrode material sheet. On the other hand, when the heating temperature in calcinating the secondary sheet is equal to or lower than the aforementioned upper limit, the negative electrode material sheet to be produced can be prevented from being excessively heated and damaged in structure, to thereby ensure a sufficiently high strength of the negative electrode material sheet.

The secondary seat may be calcinated at a heating temperature of preferably 300°C or higher, more preferably 500°C or higher, further preferably 700°C or higher, and preferably 2000°C or lower, more preferably 1500°C or lower, further preferably 1200°C or lower. When the heating temperature in calcinating the secondary sheet is equal to or higher than the lower limit, the content ratio of the resin in the negative electrode material sheet to be produced can be reduced, to thereby further improve the rate characteristics of the secondary battery to be produced using the negative electrode including the negative electrode material sheet. On the other hand, when the heating temperature in calcinating the secondary sheet is equal to or lower than the above upper limit, the negative electrode material sheet to be produced can be prevented from being excessively heated and damaged in structure, to thereby ensure a sufficiently high strength of the negative electrode material sheet.

The heating time for calcinating the secondary sheet may be adjusted according to the heating temperature, but may be set to, for example, 30 minutes or more and 72 hours or less.

### (Negative Electrode for Non-Aqueous Secondary Battery)

The negative electrode for a non-aqueous secondary battery disclosed herein is characterized by including the aforementioned negative electrode material sheet disclosed herein. For example, the negative electrode disclosed herein includes the negative electrode material sheet disclosed herein as a negative electrode mixed material layer on a current collector.

The negative electrode disclosed herein allows a secondary battery to exhibit excellent rate characteristics.

The negative electrode disclosed herein may be produced, for example, by bonding the negative electrode material sheet disclosed herein to a current collector, without being particularly limited.

Here, as the current collector, for example, a current collector made of a material such as iron, copper, aluminum, nickel, stainless steel, titanium, tantalum, gold, or platinum may be used. Of those, copper foil is particularly preferred as the current collector to be used for the negative electrode. The aforementioned materials may be used alone in one kind or in combination of two or more kinds at an arbitrary ratio.

The negative electrode material sheet may be bonded to the current collector by any method without particularly limited, and may be bonded together by a known method. An adhesive or the like may be used for bonding together the current collector and the negative electrode material sheet.

### (Non-Aqueous Secondary Battery)

The non-aqueous secondary battery disclosed herein includes the aforementioned negative electrode for a non-aqueous secondary battery disclosed herein.

For example, the non-aqueous secondary battery disclosed herein includes a positive electrode, a negative electrode, an electrolyte solution, and a separator, and uses the negative electrode for a non-aqueous secondary battery disclosed herein as the negative electrode. The non-aqueous secondary battery disclosed herein uses the negative electrode for a non-aqueous secondary battery disclosed herein, and thus exhibits excellent rate characteristics. Hereinafter, a description is given of a positive electrode, an electrolyte solution, and a separator by taking a lithium ion secondary battery as an example of the secondary battery, but this disclosure is not limited by the following examples.

### <Positive Electrode>

The positive electrode may be any known positive electrode that is used as a positive electrode for a lithium ion secondary battery. Specifically, as the positive electrode, for example, a positive electrode obtained by forming a positive electrode mixed material layer on a current collector may be used.

The current collector may be made of a metal material such as aluminum. The positive electrode mixed material layer may be a layer containing a known positive electrode active material, conductive material, and binding material.

### <Electrolyte Solution>

The electrolyte solution may be formed by dissolving an electrolyte in a solvent.

The solvent may be an organic solvent that can dissolve an electrolyte. Specifically, the solvent may be an alkyl carbonate solvent to which a viscosity modification solvent is added. Examples of the alkyl carbonate solvent include ethylene carbonate, propylene carbonate, and g-butyrolactone. Examples of the viscosity modification solvent include 2,5-dimethyltetrahydrofuran, tetrahydrofuran, diethyl carbonate, ethyl methyl carbonate, dimethyl carbonate, methyl acetate, dimethoxyethane, dioxolane, methyl propionate, and methyl formate.

The electrolyte may be a lithium salt. Examples of the lithium salt include lithium salts described in JP2012-204303A. Among those lithium-salts, LiPF₆, LiClO₄, CF₃SO₃Li is preferred as the electrolyte from the viewpoint of being easily soluble in organic solvents and exhibiting a high degree of dissociation.

### <Separator>

The separator is not particularly limited, and a known separator may be used. For example, separators described in JP2012-204303A may be used. Of those separators, a fine porous membrane made of polyolefinic resin (polyethylene, polypropylene, polybutene, or polyvinyl chloride) is preferred in view of such a membrane can reduce the total thickness of the separator, which increases the ratio of the electrode active material in the lithium ion secondary battery, and consequently increases the capacity per unit volume.

### <Method of Producing Non-Aqueous Secondary Battery>

The non-aqueous secondary battery disclosed herein may be produced, for example, by stacking a positive electrode and a negative electrode with a separator in-between, performing rolling, folding, or the like of the resultant laminate as necessary in accordance with the battery shape, placing the laminate in a battery container, injecting an electrolyte solution into the battery container, and sealing the battery container. In order to prevent pressure-increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like.

### EXAMPLES

The following provides a more specific description of the present disclosure based on examples. However, the present disclosure is not limited to the following examples. In the following description, "%" and "parts" used in expressing quantities are by mass, unless otherwise specified.

Various measurements and evaluations in the examples were performed according to the following methods.

### <Decomposition Temperature of Resin>

Thermogravimetric measurements (TGA measurements) were performed for each of the resins used in Examples and Comparative Examples at a temperature ranging from 30°C to 1000°C in an air-atmosphere at a heating rate of 10°C/min. At this time, the temperature at which the weight was reduced by 5% was defined as the decomposition temperature of the resin.

### <X-ray Diffraction>

X-ray diffractometry of the principal plane of the negative electrode was performed using "X' Pert PRO MPD" produced by PANalytical. Among the obtained peaks, the peak height (diffraction intensity) of 20 = 77 degrees corresponding to the (110) plane and the peak height (diffraction intensity) of 20 = 54.5 degrees corresponding to the (004) plane were used to obtain the value of the ratio I(110)/I(004) of the diffraction intensity of the (110) plane to the diffraction intensity of the (004) plane was calculated.

### <Content Ratio of Resin>

Thermogravimetric measurements (TGA measurements) were performed at temperatures ranging from 30°C to 1000°C with a heating rate of 10°C/min. At this time, the ratio of the weight decreased at temperatures between 30°C and 1000°C was defined as the content ratio of the resin in the negative electrode material sheet.

### <Orientation Angles of Particulate Carbon Material and Silicon Active Material>

A test sheet having a regular octagon shape in a plan view of the negative electrode material sheet was cut out from the negative electrode material sheet. The obtained test sheet in a regular octagon shape was observed at the eight side surfaces (cross-section in the thickness direction) thereof by a scanning electron microscope (SEM, "SU-3500" produced by Hitachi High-Technologies Corporation) at a magnification that fits from the upper end to the lower end of the sheet (700× in Examples and Comparative Examples described later).

For SEM images of the side surfaces, an angle (intersection angle C) formed by a straight line formed by extending the major axis of the randomly selected particle carbon material and a principal plane of the test sheet (a principal plane closer to an intersection point (approximate center) between the major axis and the minor axis of the particulate carbon material) was measured. This operation was performed on a total of 50 particulate carbon materials, and an average value of 50 intersection angles C was determined. The same procedure was performed on all of the eight surfaces, and the mean value of the intersection angle C having the largest value was defined as the orientation angle θ₁ of the particulate carbon material with respect to the principal plane of the negative electrode material.

Further, for SEM images of the side surfaces, an angle (intersection angle S) formed by a straight line formed by extending the major axis of a randomly selected silicon active material and a principal plane (a principal plane closer to an intersection point (approximate center) between the major axis and the minor axis of the silicon active material) of the test sheet was measured. This operation was performed on a total of 50 silicon active materials, and an average value of the 50 intersection angles S was obtained. The same procedure was performed on all of the eight surfaces, and the mean value of the intersection angle S having the largest value was set as the orientation angle θ₂ of the silicon active material with respect to the principal plane of the negative electrode material.

### <Thickness>

The thicknesses of the negative electrode material sheet (or the negative electrode mixed material layer of the coated electrode) were measured at five points in total, namely, at four corners (squares) and an approximate center, using a film thickness meter (product name: "Digimatic Indicator ID-C112XBS", produced by Mitutoyo Corporation), and a mean value (µm) of the thicknesses thus measured of the negative electrode material sheet (or the negative electrode mixed material layer) was defined as the thickness of the negative electrode material sheet (or the negative electrode mixed material layer).

### <Density>

The mass, the area, and the thickness of the negative electrode material sheet (or the negative electrode mixed material layer of the coated electrode) were measured and the mass was divided by the volume (=area×thickness), to thereby calculate the density of the negative electrode material sheet (or the negative electrode mixed material layer of the coated electrode).

### <Areal Weight>

The density of the negative electrode material sheet (or the negative electrode mixed material layer of the application electrode) is multiplied by the thickness, to thereby calculate the areal weight of the negative electrode material sheet (or the negative electrode mixed material layer).

### <Strength>

A test piece was fabricated by cutting the negative electrode material into 1 cm×5 cm piece. Also, a 6 cm×6 cm×2 cm base was prepared. Then, the right half from the center of the test piece was placed on the base, and the left half was placed to be outside of the base. Further, a 6×6×2 mm aluminum plate was placed on the right half of the test piece. Then, the weights of 100 mg, 200 mg, and 300 mg were alternately placed in order on the portion outside the base of the test piece until the test piece was broken, and based on the total weight of the weights on the test piece when the test piece was broken, the strength of the negative electrode material sheet was evaluated according to the following criteria.

The evaluation of strength could not be performed for the negative electrode mixed material layer included in the coating electrode as the layer did not become a self-supporting film.
A: The test piece was broken at the weight of 300 mg
B: The test piece was broken at the weight of 200 mg
C: The test piece was broken at the weight of 100 mg

### <Electrolyte Injection Characteristics>

A test piece obtained by punching the negative electrode material sheet (or the coating electrode) to 17 mmϕ was immersed in 10 mL of an electrolyte solvent (propylene carbonate) in a dry room for 5 minutes. Then, the weight A (mg) of the test piece before immersion was deducted from the weight B (mg) of the test piece after immersion to obtain an amount of liquid absorption B-A (mg), based on which the electrolyte injection characteristics of the negative electrode material was evaluated according to the following criteria.
A: The amount of liquid absorption is 4 mg or more
B: The amount of liquid absorption is 2 mg or more and less than 4mg
C: The amount of liquid absorption is less than 2mg

### <Rate Characteristics>

### <<Production of Cell for Electrode Evaluation>>

A half-cell of a lithium ion secondary battery for evaluation was fabricated into the following configuration. For the fabrication of the half-cell, each member was punched into 17 mmϕ in size, which was vacuum dried (at 120°C×10 hours), and thereafter the half-cell was fabricated in a dry box of dew point of -80°C.

### [Configuration of Half-Cell]

Working electrode: negative electrode (a negative electrode obtained by bonding a negative electrode material sheet to a copper foil, or a coated electrode)
Counter electrode: Li metal
Reference electrode: Li metal
Separator: glass-nonwoven fabric, polyethylene (PE) microporous membrane
Electrolyte: LiPF₆ solution of 1.0 M concentration (the solvent is a mixed solvent of ethylene carbonate (EC)/methyl ethyl carbonate (MEC)=3/7 (volume ratio)), and vinylene carbonate (VC) as an additive is contained in an amount of 1% by volume (solvent ratio))

### <Charge/Discharge Test>>

The obtained half-cell for evaluation was subjected to a charge-discharge test under Condition 1 below.

### (Condition 1)

Charging condition: 0.2C charging voltage 0.01V-CCCV (0.05 Ccut)
Discharging condition: 0.2C end-voltage 2.5V-CC
Number of cycles: 10 cycles
Test temperature: 25°C

Next, a charge-discharge test was further performed under Condition 2 below.

### (Condition 2)

Charging condition: 0.2C charging voltage 0.01V-CCCV (0.05 Ccut)
Discharging condition: 2.0C end-voltage 2.5V-CC
Number of cycles: 10 cycles
Test temperature: 25°C

Then, the ratio of the discharge capacity (measured under Condition 2) in 2.0C to the discharge capacity (measured under Condition 1) in 0.2C was calculated as a percentage (=(discharge capacity in the discharge capacity /0.2C in 2.0C)×100%) was defined as the charge/discharge rate characteristics. A larger value for the charge/discharge rate characteristic indicates that the internal resistance is smaller, enabling charge/discharge at high speed (that is, the rate characteristic is excellent).

### <Suppression of Increase in Interelectrode Distance>

In evaluating the aforementioned "rate characteristics", how much the distance between the electrodes was enlarged was calculated based on T2-T1 (the amount of increase in the interelectrode distance), based on the thickness T1 of the half-cell prior to the charge-discharge test under Condition 1 and the thickness T2 of the half-cell after the charge-discharge test under Condition 2. When the value is smaller, it means that the increase in the interelectrode distance after repeated charging and discharging was suppressed.

### <Discharge Capacity>

In evaluating the "rate characteristics", the discharge capacity (initial discharge capacity) of the first cycle under Condition 1 in the charge-discharge test was measured. When the value is larger, it means the battery capacity of the secondary battery may be increased.

### (Example 1-1)

### <Preparation of Composition>

A pressure kneader (produced by Nihon Spindle Manufacturing Co., Ltd.) was used to stir and mix, at a temperature of 150°C for 20 minutes, 210 parts of nitrile rubber (NBR) (trade name: "Nipol 1312", produced by Nippon Zeon Co., Ltd., decomposition temperature: 336°C) that is liquid under ordinary temperature and normal pressure, 90 parts of nitrile rubber (NBR) (trade name: "Nipol 3350", produced by Nippon Zeon Co., Ltd., decomposition temperature: 375°C) that is solid under ordinary temperature and normal pressure, and, as the particulate carbon material, 820 parts (amount corresponding to 364 parts by volume per 300 parts by volume of the resin used) of scaly graphite (trade name: "UP20α", produced by Nippon Graphite Industries, Ltd., volume-average particle diameter: 20 µm, aspect ratio=10). Next, the resulting mixture was charged into a crusher (trade name: "Wonder Crush Mill D3V-10", produced by OSAKA CHEMICAL Ind. Co., Ltd.) and crushed for 10 seconds to obtain a composition.

### <Formation of Primary Sheet>

Next, 50 g of the resulting composition was sandwiched between 50 µm-thick sandblasted PET films (protective films), and roll-shaped (primary pressurization) under the conditions of a roll gap of 1000 µm, a roll temperature of 50°C, a roll linear pressure of 50 kg/cm, and a roll speed of 1 m/min., to thereby obtain a primary sheet having a thickness of 0.8 mm.

### <Formation of Laminate>

Subsequently, the obtained primary sheet was cut into a size of 150 mm in length×150 mm in width×0.8 mm in thickness, and 188 of the cut-out sheets were stacked in the thickness direction of the primary sheet, and further, pressed (secondary pressurization) in the stacking direction at a temperature of 120°C and a pressure of 0.1 MPa for 3 minutes, to thereby obtain a laminate having a height of about 150 mm.

### <Formation of Secondary Sheet>

Thereafter, the laminate side of the secondarily pressurized laminate was sliced using a woodworking slicer (trade name: "Super Surfacer Super Mecha S", produced by Marunaka Tekkosho Inc.) at an angle of 0 degrees with respect to the stacking direction (in other words, in the normal direction of the principal plane of the laminated primary sheet), while pressing the laminate side with a pressure of 0.3 MPa, to thereby obtain a secondary sheet in a size of 150 mm in length×150 mm in width×0.10 mm in thickness.

### <Fabrication of Negative Electrode Material Sheet>

Thereafter, the obtained secondary sheet was calcinated at 1000°C for 8 hours in a nitrogen atmosphere to burn and remove the resin component, to thereby obtain a negative electrode material sheet.

Various measurements and evaluations were performed using the obtained negative electrode material sheet. The results are illustrated in Table 1.

### (Example 1-2)

The composition was prepared, the primary sheet was formed, the laminate was formed, the secondary sheet was formed, and the negative electrode material sheet was fabricated, in the same manner as in Example 1-1, except that the amount of scaly graphite used as the particulate carbon material used in the preparation of the composition of Example 1-1 was changed from 820 parts to 450 parts (an amount corresponding to 200 parts by volume with respect to 300 parts by volume of the resin used), and various measurements and evaluations were performed. The results are illustrated in Table 1.

### (Example 1-3)

The composition was prepared, the primary sheet was formed, the laminate was formed, the secondary sheet was formed, and the negative electrode material sheet was fabricated, in the same manner as in Example 1-1, except that 820 parts of scaly graphite used as the particulate carbon material in the preparation of the composition of Example 1-1 was replaced with 820 parts of spheroidized natural graphite (trade name: "DMGS", produced by Atomaxchem, volume-average particle diameter: 15 µm, aspect ratio=2), and various measurements and evaluations were performed. The results are illustrated in Table 1.

### (Example 1-4)

The composition was prepared, the primary sheet was formed, the laminate was formed, the secondary sheet was formed, and the negative electrode material sheet was fabricated, in the same manner as in Example 1-1, except that the amount of scaly graphite used as the particulate carbon material in the preparation of the composition of Example 1-1 was changed from 820 parts to 720 parts (an amount corresponding to 322 parts by volume with respect to 300 parts by volume of the resin used) and 36 parts (3.6 parts in terms of SGCNT) of SGCNT masterbatch obtained in Production Example 1 below was added, and various measurements and evaluations were performed. The results are illustrated in Table 1.

### <Production Example 1: Method of Producing SGCNT Masterbatch>

Single-layer CNT (product name: "ZEONANO SG101", produced by Zeon Nano Technology Co., Ltd., SGCNT, mean diameter: 3.5 nm, mean length: 400 µm, BET specific surface area: 1050 m²/g) was added as the fibrous carbon material to a methyl ethyl ketone solvent aiming at a concentration of 0.2%, a basic group-containing polymer (product name: "AJISPER PB821", produced by Ajinomoto Fine-Techno Co., Inc., amine value: 10 mgKOH/g, acid value: 17 mgKOH/g) was further added as the dispersant in an amount of 1 equivalent (the same amount) relative to the added amount of CNT, and the mixture was stirred with a magnetic stirrer for 1 hour, to thereby obtain a coarse dispersion.

Next, the coarse dispersion was charged into a multistage step-down high-pressure homogenizer ("BERYU SYSTEM PRO" produced by Be-Ryu Com.) equipped with a multi-stage pressure control device (multi-step pressure reducer) connected to a high-pressure dispersion treatment unit (jet mill) having a thin tube channel of 170 µm in diameter, and a pressure of 100 MPa was applied intermittently and instantaneously to the coarse dispersion at a temperature of 25°C to feed the coarse dispersion into the thin tube channel. This cycle was repeated three times.

Next, the aforementioned thin tube channel was replaced with a thin tube channel of 90 µm in diameter, and the same dispersion process as one cycle was repeated three times to obtain a dispersion of SGCNT (SGCNT concentration: 0.1%).

To 6 kg of the SGCNT dispersion, 12 g of NBR that is liquid under ordinary temperature and normal pressure (trade name: "Nipol 1312", produced by Nippon Zeon Co., Ltd.) was added and stirred thoroughly, and then methyl ethyl ketone was distilled off. As a result, a SGCNT masterbatch containing SGCNT at a concentration of 10% was obtained.

### (Example 1-5)

The composition was prepared, the primary sheet was formed, the laminate was formed, the secondary sheet was formed, and the negative electrode material sheet was fabricated, in the same manner as in Example 1-1, except that the amount of NBR that is liquid under ordinary temperature and normal pressure (trade name "Nipol 1312", produced by Nippon Zeon Co., Ltd., decomposition temperature: 336°C) was changed from 210 parts to 170 parts, the amount of NBR that is solid under ordinary temperature and normal pressure (trade name: "Nipol 3350", produced by Nippon Zeon Co., Ltd., decomposition temperature: 375°C) was changed from 90 parts to 104 parts, 52 parts of fluorine rubber (trade name: "FC-2211", produced by 3M Japan Limited) that is solid under ordinary temperature and normal pressure as a resin having a decomposition temperature different from those of the liquid NBR and the solid NBR mentioned above were further added in the preparation of the composition of Example 1-1, and the calcination temperature in the fabrication of the negative electrode material sheet was changed from 100°C to 360°C, and various measurements and evaluations were performed. The results are illustrated in Table 1.

### (Example 1-6)

The composition was prepared, the primary sheet was formed, the laminate was formed, the secondary sheet was formed, and the negative electrode material sheet was fabricated, in the same manner as in Example 1-1, except that the calcination temperature was changed from 1000°C to 360°C in the fabrication of the negative electrode material sheet of Example 1-1, and various measurements and evaluations were performed. The results are illustrated in Table 1.

### (Example 1-7)

The composition was prepared, the primary sheet was formed, the laminate was formed, the secondary sheet was formed, and the negative electrode material sheet was fabricated, in the same manner as in Example 1-1, except that the calcination temperature was changed from 1000°C to 360°C in the fabrication of the negative electrode material sheet of Example 1-1, and various measurements and evaluations were performed. The results are illustrated in Table 1.

### (Example 2-1)

### <Preparation of Composition>

A pressure kneader (produced by Nihon Spindle Manufacturing Co., Ltd.) was used to stir and mix, at a temperature of 150°C for 20 minutes, 155 parts of nitrile rubber (NBR) that is liquid under ordinary temperature and normal pressure (trade name: "Nipol 1312", produced by Nippon Zeon Co., Ltd., decomposition temperature : 336°C), 66.4 parts of nitrile rubber (NBR) that is solid under ordinary temperature and normal pressure (trade name: "Nipol 3350", produced by Nippon Zeon Co., Ltd., decomposition temperature: 375°C), 500 parts of scaly graphite (trade name: "UP20α", produced by Nippon Graphite Industries, Co., Ltd., volume-average particle diameter: 20 µm, aspect ratio: 10) as the particulate carbon material, and 100 parts of a silicon active material A (trade name: "SiO carbon coat", produced by Osaka Titanium Co., Ltd., volume average particle diameter: 5 µm, aspect ratio: 2.13 g/cm³) as the silicon active material. Then, the mixture was charged into a crusher (trade name: "Wonder Crush Mill D3V-10", produced by OSAKA CHEMICAL Ind. Co., Ltd.) and crushed for 10 seconds to obtain a composition.

### <Formation of Primary Sheet>

Next, 50g of the resulting composition was sandwiched between 50 µm-thick sandblasted PET films (protective films), and roll-shaped (primary pressurization) under the conditions of a roll gap of 1000 µm, a roll temperature of 50°C, a roll linear pressure of 50kg/cm, and a roll speed of 1 m/min., to thereby obtain a primary sheet having a thickness of 0.8 mm.

### <Formation of Laminate>

Subsequently, the obtained primary sheet was cut into a size of 150 mm in length×150 mm in width×0.8 mm in thickness, and 188 of the cut-out sheets were stacked in the thickness direction of the primary sheet, and further, pressed (secondary pressurization) in the stacking direction at a temperature of 120°C and a pressure of 0.1 MPa for 3 minutes, to thereby obtain a laminate having a height of about 150 mm.

### <Formation of Secondary Sheet>

Thereafter, the laminate side of the secondarily pressurized laminate was sliced using a woodworking slicer (trade name: "Super Surfacer Super Mecha S", produced by Marunaka Tekkosho Inc.), at an angle of 0 degrees with respect to the stacking direction (in other words, in the normal direction of the principal plane of the laminated primary sheet), while pressing the laminate side with a pressure of 0.3 MPa, to thereby obtain a secondary sheet in a size of 150 mm in length×150 mm in width×0.10 mm in thickness.

### <Fabrication of Negative Electrode Material Sheet>

The obtained secondary sheet was calcinated at 1000°C for 8 hours in a nitrogen atmosphere to burn and remove the resin component, to thereby obtain a negative electrode material sheet.

Various measurements and evaluations were performed using the obtained negative electrode material sheet. The results are illustrated in Table 2.

### (Example 2-2)

The composition, the primary sheet, the laminate, the secondary sheet, and the negative electrode material sheet were fabricated, in the same manner as in Example 2-1, except that a silicone active material B (trade name: "SiO carbon coat", produced by OSAKA Titanium technologies Co., Ltd., volume-average particle diameter: 1 µm, aspect ratio: 3, density: 2.13 g/cm³) was used instead of the silicon active material A in preparation of the composition of Example 2-1, and various evaluations were performed. The results are illustrated in Table 2.

### (Example 2-3)

The composition, the primary sheet, the laminate, the secondary sheet, and the negative electrode material sheet were fabricated, in the same manner as in Example 2-1, except that the amount of the nitrile rubber (NBR) that is liquid under ordinary temperature and normal pressure was changed to 46.5 parts, the amount of the nitrile rubber (NBR) that is solid under ordinary temperature was changed to 60 parts, and the amount of the silicon active material A was changed to 50 parts, and 110 parts of CNT masterbatch (including 16.5 parts of CNT) obtained by the following procedure was added, in preparation of the composition of Example 2-1, and various evaluations were performed. The results are illustrated in Table 2.

In Table 2, the "resin" in the "volume of resin" of Example 2-3 also includes the volume of the dispersant used in the preparation of CNT masterbatch.

### <Method of Producing CNT Masterbatch>

Single-layer CNT (product name: "ZEONANO SG101", produced by Zeon Nano Technology Co., Ltd., a CNT obtained by the super-growth method (see WO2006/011655), mean diameter: 3.5 nm, mean length: 400 µm, BET specific surface area: 1050 m²/g) was added as the fibrous carbon material to a methyl ethyl ketone solvent aiming at a concentration of 0.2%, a basic group-containing polymer (product name: "AJISPER PB821", produced by Ajinomoto Fine-Techno Co., Inc., amine value: 10 mgKOH/g, acid value: 17 mgKOH/g) was further added as the dispersant in an amount of 1 equivalent (the same amount) relative to the added amount of CNT, and the mixture was stirred with a magnetic stirrer for 1 hour, to thereby obtain a coarse dispersion.

Next, the coarse dispersion was charged into a multistage step-down high-pressure homogenizer ("BERYU SYSTEM PRO" produced by Be-Ryu Com.) equipped with a multi-stage pressure control device (multi-step pressure reducer) connected to a high-pressure dispersion treatment unit (jet mill) having a thin tube channel of 170 µm in diameter, and a pressure of 100 MPa was applied intermittently and instantaneously to the coarse dispersion at a temperature of 25°C to feed the coarse dispersion into the thin tube channel. This cycle was repeated three times.

Next, the aforementioned thin tube channel was replaced with a thin tube channel of 90 µm in diameter, and the same dispersion process as one cycle was repeated three times to obtain CNT dispersion (CNT concentration: 0.1 %).

To 9 kg of the CNT dispersion, 12 g of NBR that is liquid under ordinary temperature and normal pressure (trade name: "Nipol 1312", produced by Nippon Zeon Co., Ltd.) was added and stirred thoroughly, and then methyl ethyl ketone was distilled off. As a result, a CNT masterbatch containing SGCNT at a concentration of 15% was obtained.

### (Example 2-4)

The composition, the primary sheet, the laminate, the secondary sheet, and the negative electrode material sheet were fabricated, in the same manner as in Example 2-1, except that the amount of the nitrile rubber (NBR) that is liquid under ordinary temperature and normal pressure was changed to 140 parts, the amount of the nitrile rubber (NBR) that is solid under ordinary temperature and normal pressure was changed to 60 parts, and the amount of the silicon active material A was changed to 50 parts, in the preparation of the composition of Example 2-1, and various evaluations were performed. The results are illustrated in Table 2.

### (Example 2-5)

The composition, the primary sheet, the laminate, the secondary sheet, and the negative electrode material sheet were fabricated, in the same manner as in Example 2-1, except that the amount of the nitrile rubber (NBR) that is liquid under ordinary temperature and normal pressure was changed to 135 parts, the amount of the nitrile rubber (NBR) that is solid under ordinary temperature and normal pressure was changed to 57.9 parts, and the amount of the silicon active material A was changed to 25 parts, in the preparation of the composition of Example 2-1, and various evaluations were performed. The results are illustrated in Table 2.

### (Example 2-6)

The composition, the primary sheet, the laminate, the secondary sheet, and the negative electrode material sheet were fabricated, in the same manner as in Example 2-1, except that the amount of the nitrile rubber (NBR) that is liquid under ordinary temperature and normal pressure was changed to 160 parts, the amount of the nitrile rubber (NBR) that is solid under ordinary temperature and normal pressure was changed to 68.6 parts, and the amount of the silicon active material A was changed to 70 parts, in the preparation of the composition of Example 2-1, and various evaluations were performed. The results are illustrated in Table 2.

### (Example 2-7)

The composition, the primary sheet, the laminate, the secondary sheet, and the negative electrode material sheet were fabricated, in the same manner as in Example 2-1, except that the amount of the nitrile rubber (NBR) that is liquid under ordinary temperature and normal pressure was changed to 160 parts, the amount of the nitrile rubber (NBR) that is solid under ordinary temperature and normal pressure was changed to 68.6 parts, and the amount of the silicon active material A was changed to 230 parts, in the preparation of the composition of Example 2-1, and various evaluations were performed. The results are illustrated in Table 2.

### (Comparative Example 2-1)

### <Preparation of Composition and Primary Sheet>

A composition and a primary sheet were prepared in the same manner as in Example 2-1, except that the thickness of the primary sheet was changed to 0.10 mm in forming the primary sheet of Example 2-1.

### <Preparation of Negative Electrode Material Sheet>

The obtained primary sheet was calcinated at 1000°C for 8 hours in a nitrogen atmosphere to burn and remove the resin, to thereby obtain a negative electrode material sheet.

Various measurements and evaluations were performed using the obtained negative electrode material sheet. The results are illustrated in Table 2.

### (Example 2-8)

The composition, the primary sheet, the laminate, the secondary sheet, and the negative electrode material sheet were fabricated, in the same manner as in Example 2-1, except that the amount of the nitrile rubber (NBR) that is liquid under ordinary temperature and normal pressure was changed to 175 parts, the amount of the nitrile rubber (NBR) that is solid under ordinary temperature and normal pressure was changed to 75 parts, and the amount of the silicon active material A was changed to 700 parts, and without using the silicon active material A, in the preparation of the composition of Example 2-1, and various evaluations were performed. The results are illustrated in Table 2.

**[Table 1]**

| | | | | Example 1-1 | Example 1-2 | Example 13 | Example 1-4 | Example 1-5 | Example 1-6 | Example 1-7 |
|---|---|---|---|---|---|---|---|---|---|---|
| Before Calcination (Primary Sheet and Secondary Sheet) | Composition | Resin | Nipol 1312 (Liquid NBR) [parts by mass] | 210 | 210 | 210 | 210 | 170 | 210 | 210 |
| | | | Nipol 3335 (Solid NBR) [parts by mass] | 90 | 90 | 90 | 90 | 104 | 90 | 90 |
| | | | FC-2211 (Solid Fluorine Rubber) [parts by mass] | - | - | - | - | 52 | - | - |
| | | Particulate Carbon Material | Scaly Graphite (UP20α) [parts by mass] | 820 | 450 | - | 720 | 820 | 820 | 820 |
| | | | Spheroidized Natural Graphite (DMGS) [parts by mass] | - | - | 820 | - | - | - | - |
| | | Fibrous Carbon Material | SGCNT [parts by mass] | - | - | - | 3.6 | - | - | - |
| | Volume of Resin [parts by volume] | | | 300 | 300 | 300 | 300 | 303 | 300 | 300 |
| | Volume of Particulate Carbon Material [parts by volume] | | | 364 | 200 | 364 | 322 | 364 | 364 | 364 |
| | Volume Fraction (particulate carbon material/resin+particulate carbon material) [% by volume] | | | 55 | 40 | 55 | 52 | 55 | 55 | 55 |
| Calcination | Conditions (temperature×time) | | | 1000°C×8 hours | 1000°C×8 hours | 1000°C×8 hours | 1000°C×8 hours | 360°C×8 hours | 360°C×8 hours | 2000°C×8 hours |
| After Calcination (Negative Electrode Material Sheet) | Ratio I(110)/I(004) of Diffraction Intensity in X-ray Diffraction | | | 88.5 | 67.5 | 5.1 | 693 | 85.2 | 52.4 | 20.8 |
| | Content Ratio of Resin [% by mass] | | | 0 | 0 | 0 | 0 | 8 | 0 | 0 |
| | Orientation Angle θ₁ [°] | | | 87 | 78 | 68 | 82 | 80 | 84 | 74 |
| | Thickness [µm] | | | 108 | 108 | 108 | 108 | 108 | 108 | 108 |
| | Density [mg/cm³] | | | 1.21 | 0.72 | 1.03 | 1.08 | 1.30 | 1.24 | 1.18 |
| | Areal Weight [mg/cm²] | | | 13.0 | 7.6 | 10.8 | 11.9 | 14.0 | 13.4 | 12.7 |
| | Strength | | | B | C | C | B | A | B | C |
| | Electrolyte Injection Characteristics | | | A | A | B | A | B | A | A |
| Secondary Battery (Half-Cell) | Rate Characteristics (2C rate) [%] | | | 78.8 | 89.2 | 73.5 | 76.4 | 48.8 | 71.2 | 80.2 |

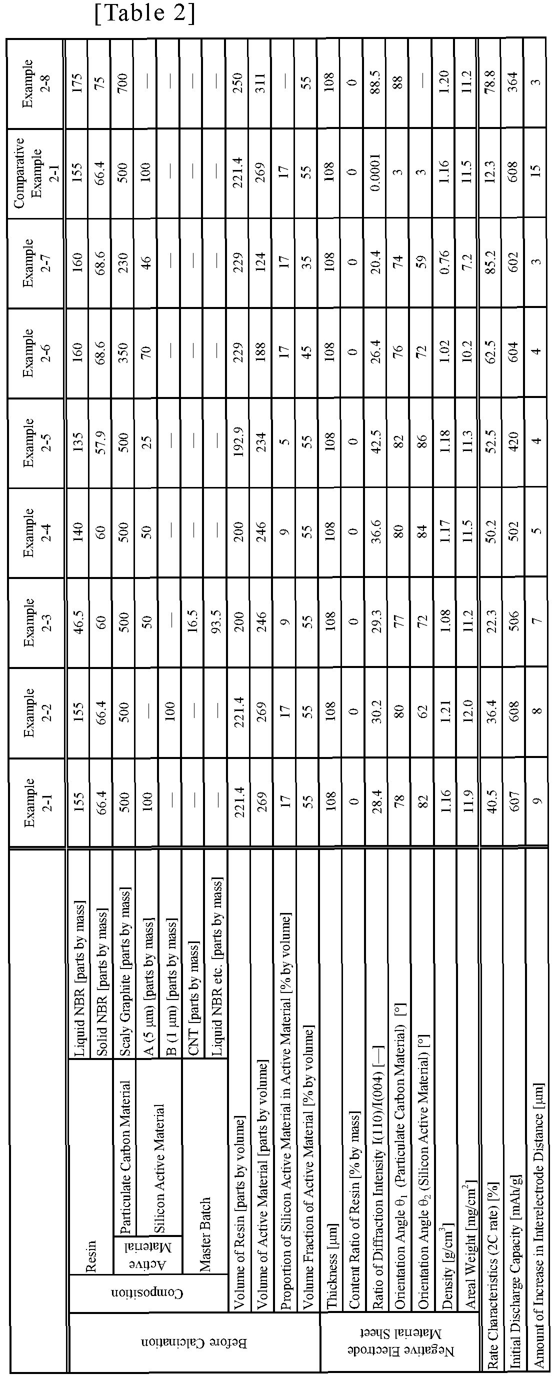

Tables 1 and 2 suggest that the negative electrodes of Examples 1-1 to 1-7 and 2-1 to 2-8 prepared by bonding a negative electrode material sheet as a negative electrode mixed material layer to a current collector, the negative electrode material sheet containing a particulate carbon material, having the ratio I(110)/I(004) of the diffraction intensity at the X-ray diffraction of the principal plane that is equal to or greater than the predetermined value, and satisfying at least one of the following conditions: (1) the content of the resin is equal to or less than the predetermined value; and (2) the density is equal to or less than the predetermined value, allow a secondary battery to exhibit excellent rate characteristics.

On the other hand, Comparative Example 2-1 suggests that a secondary battery is inferior in rate characteristics when using a negative electrode including a negative electrode material sheet in which the ratio I(110)/I(004) of the diffraction intensity in the X-ray diffraction of the principal surface is less than the predetermined value.

### INDUSTRIAL APPLICABILITY

The present disclosure is capable of providing a negative electrode material sheet for a non-aqueous secondary battery that enables to form a negative electrode capable of exhibiting excellent rate characteristics in a non-aqueous secondary battery.

Further, the present disclosure is capable of providing a negative electrode that may allow a non-aqueous secondary battery to exhibit excellent rate characteristics.

Further, the present disclosure is capable of providing a non-aqueous secondary battery that may exhibit excellent rate characteristics.

## Claims

1. A negative electrode material sheet for a non-aqueous secondary battery, the negative electrode material sheet containing a particulate carbon material, wherein
the negative electrode material sheet for a non-aqueous secondary battery has a ratio I(110)/I(004) of a diffraction intensity of a (110) plane relative to a diffraction intensity of a (004) plane in X-ray diffraction of a principal plane thereof of 1.1 or more, and satisfies at least one of (1) and (2) below:
(1) the negative electrode material sheet for a non-aqueous secondary battery contains a resin at a content ratio of 8% by mass or less; and
(2) the negative electrode material sheet for a non-aqueous secondary battery has a density of 1.3 g/cm³ or less.

2. The negative electrode material sheet for a non-aqueous secondary battery according to claim 1, having a thickness of 80 µm or more.

3. The negative electrode material sheet for a non-aqueous secondary battery according to claim 1 or 2, wherein the particulate carbon material comprises scaly graphite.

4. The negative electrode material sheet for a non-aqueous secondary battery according to any of claims 1 to 3, wherein the particulate carbon material has an aspect ratio of more than 1.2 and 20 or less.

5. The negative electrode material sheet for a non-aqueous secondary battery according to any of claims 1 to 4, wherein the ratio I(110)/I(004) is 20 or more.

6. The negative electrode material sheet for a non-aqueous secondary battery according to any of claims 1 to 5, wherein the resin is contained at a content ratio of 3 mass% or less.

7. The negative electrode material sheet for a non-aqueous secondary battery according to any of claims 1 to 6, wherein, in a cross-sectional view in a thickness direction of the negative electrode material sheet, the particulate carbon material is oriented at an orientation angle θ₁ of 60° or more and 90° or less with respect to the principal plane of the negative electrode material sheet for a non-aqueous secondary battery.

8. The negative electrode material sheet for a non-aqueous secondary battery according to any of claims 1 to 6, further comprising a silicon active material, wherein
in a cross-sectional view in a thickness direction of the negative electrode material sheet, the particulate carbon material is oriented at an orientation angle θ₁ of 45° or more and 90° or less with respect to the principal plane of the negative electrode material sheet for a non-aqueous secondary battery, and the silicon active material is oriented at an orientation angle θ₂ of 45° or more and 90° or less with respect to the principal plane of the negative electrode material sheet for a non-aqueous secondary battery.

9. The negative electrode material sheet for a non-aqueous secondary battery according to claim 8, wherein the silicon active material has a volume of 5% by volume or more and 30 % by volume or less in a total volume of the particulate carbon material and the silicon active material.

10. The negative electrode material sheet for a non-aqueous secondary battery according to any of claims 1 to 9, wherein the negative electrode material sheet for a non-aqueous secondary battery contains a fibrous carbon material at 1% by mass or less in a total mass of the negative electrode material sheet for a non-aqueous secondary battery.

11. A method of producing a negative electrode material sheet for a non-aqueous secondary battery, comprising:
a primary sheet shaping step of pressing a composition including a resin and a particulate carbon material into a sheet shape, to thereby obtain a primary sheet;
a laminate forming step of stacking a plurality of the primary sheets in a thickness direction, or folding or winding the primary sheet, to thereby obtain a laminate;
a slicing step of slicing the laminate at an angle of 45° or less with respect to a stacking direction, to thereby obtain a secondary sheet; and
calcinating step of calcinating the secondary sheet.

12. The method of producing a negative electrode material sheet for a non-aqueous secondary battery according to claim 11, wherein
the resin has a decomposition temperature of T°C, and
the calcinating step includes calcinating the secondary sheet at T-50°C or higher.

13. The method of producing a negative electrode material sheet for a non-aqueous secondary battery according to claim 11 or 12, wherein the calcinating step includes calcinating the secondary sheet at 300°C or higher and 2000°C or lower.

14. The method of producing a negative electrode material sheet for a non-aqueous secondary battery according to any of claims 11 to 13, wherein the particulate carbon material comprises scaly graphite.

15. The method of producing a negative electrode material sheet for a non-aqueous secondary battery according to any of claims 11 to 14, wherein the particulate carbon material has an aspect ratio of more than 2 and 20 or less.

16. The method of producing a negative electrode material sheet for a non-aqueous secondary battery according to any of claims 11 to 15, wherein the composition further comprises a silicon active material.

17. A negative electrode for a non-aqueous secondary battery, comprising the negative electrode material sheet for a non-aqueous secondary battery according to any of claims 1 to 10.

18. A non-aqueous secondary battery comprising the negative electrode for a non-aqueous secondary battery according to claim 17.
